(19) **Europäisches Patentamt European Patent Office Office européen des brevets**

(11) **EP 4 625 272 A1**

(12) **EUROPEAN PATENT APPLICATION**
published in accordance with Art. 153(4) EPC

(43) Date of publication:
**01.10.2025   Bulletin 2025/40**

(21) Application number: **22968224.0**

(22) Date of filing: **16.12.2022**

(51) International Patent Classification (IPC):
**G06N 20/00** (2019.01)      **H04L 27/00** (2006.01)

(52) Cooperative Patent Classification (CPC):
**G06N 20/00; H04L 27/00**

(86) International application number:
**PCT/CN2022/139469**

(87) International publication number:
**WO 2024/124516 (20.06.2024 Gazette 2024/25)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Huawei Technologies Co., Ltd.**
**Shenzhen, Guangdong 518129 (CN)**

(72) Inventors:
• **DAI, Shengchen**
**Shenzhen, Guangdong 518129 (CN)**

• **WANG, Jian**
**Shenzhen, Guangdong 518129 (CN)**
• **ZHANG, Gongzheng**
**Shenzhen, Guangdong 518129 (CN)**
• **LI, Rong**
**Shenzhen, Guangdong 518129 (CN)**

(74) Representative: **Maiwald GmbH**
**Engineering**
**Elisenhof**
**Elisenstrasse 3**
**80335 München (DE)**

(54) **DATA PROCESSING METHOD AND RELATED APPARATUS**

(57)   This application discloses a data processing method. In the method, each second node codes corresponding local model parameter information in a corresponding coding scheme to obtain corresponding first parameter information. Then, over-the-air superimposition is performed on respective first parameter information of a plurality of second nodes, so that the first node receives fused information obtained through over-the-air superimposition. Then, the first node sends second parameter information obtained based on the fused information to each second node, so that each second node obtains updated model parameter information based on the second parameter information. In the solutions, updated model parameter information obtained by encoding and then fusing respective local model parameter information of all the second nodes and then performing parameter estimation based on the fused information is relatively accurate, thereby reducing impact of an error caused by channel noise between the second node and the first node on a training process in the second node.

Step 201. Each second node sends first parameter information of each second node to a first node, so that over-the-air superimposition is performed on first parameter information of all second nodes to obtain fused information

Step 202. The first node receives the fused information

Step 203. The first node sends second parameter information obtained based on the fused information to each second node

Step 204. Each second node receives the second parameter information sent by the first node

Step 205. Each second node obtains updated model parameter information based on the second parameter information

FIG. 2

# Description

## TECHNICAL FIELD

This application relates to the field of artificial intelligence technologies, and specifically, to a data processing method and a related apparatus.

## BACKGROUND

In a scenario like federated learning, a plurality of nodes usually need to obtain local data, and jointly complete a same task through coordination and cooperation, like information exchange, between the plurality of nodes.

Federated learning is used as an example. Federated learning aims to jointly train a machine learning model by using data of a plurality of nodes without leaking plaintext data of the plurality of nodes, so that data is available but invisible.

In a federated learning process, each node may train a machine learning model based on a local data set, and send local model parameter information, like a weight, obtained in a local training process to a first node, for example, a central node. The first node may fuse respective local model parameter information of all nodes to obtain global model parameter information, and then send the global model parameter information to each node.

However, currently, based on a conventional wireless communication link, usually, after sequentially receiving signals sent by all the nodes, the first node performs a series of complex operations such as demodulation and decoding on a signal of each node to extract local model parameter information carried in each signal, and then performs subsequent processing to obtain the global model parameter information. Consequently, this manner is time-consuming and has relatively high processing complexity.

## SUMMARY

Embodiments of this application provide a data processing method, to resolve a problem that processing complexity is relatively high in a manner in which a first node receives, based on a conventional wireless communication link, a signal sent by each node, and then performs a series of complex operations on the signal of each node to obtain global model parameter information. Embodiments of this application further provide a corresponding apparatus, a computer-readable storage medium, a computer program product, and the like.

A first aspect of this application provides a data processing method. The method is applied to a first node, and the first node is connected to each of a plurality of second nodes through a wireless channel. The method includes: receiving fused information, where the fused information is obtained by performing over-the-air superimposition on first parameter information from all the second nodes, and first parameter information sent by each second node is obtained by the corresponding second node by encoding corresponding local model parameter information in a corresponding coding scheme; and sending second parameter information obtained based on the fused information to each second node, where the second parameter information is used by each second node to obtain updated model parameter information.

It may be understood that, that the method may be applied to a first node indicates that the method may be applied to a communication device that serves as the first node, or a chip (system) on the communication device. In addition, the sending second parameter information to each second node indicates a transmission direction of the second parameter information and that the second node is a destination, and includes directly sending the second parameter information to the second node, or includes indirectly sending the second parameter information to the second node through a transmitter.

In the first aspect, over-the-air superimposition is performed on the first parameter information sent by all the second nodes to obtain the fused information, so that the first node can directly and efficiently obtain the fused information, thereby greatly improving efficiency of obtaining the fused information by the first node.

In addition, the first parameter information sent by each second node is obtained by the corresponding second node by encoding the local model parameter information of the corresponding second node in the coding scheme corresponding to the corresponding second node. In this way, the updated model parameter information may be obtained based on the fused information and coding schemes respectively corresponding to all the second nodes. In this solution, noise in a wireless transmission process has relatively small impact on updated model parameter information obtained by encoding and then fusing respective local model parameter information of all the second nodes and then performing parameter estimation based on the fused information, and the updated model parameter information is relatively accurate, thereby reducing impact of an error caused by channel noise between the second node and the first node on a training process in the second node, and improving a training speed in the second node.

In a possible implementation of the first aspect, the method further includes: determining, based on connection status information between the first node and the plurality of second nodes and/or a training phase corresponding to the local model parameter information of each second node, the coding scheme corresponding to each second node; and sending, to each second node, information about the coding scheme corresponding to the second node.

In this possible implementation, a coding parameter, for example, a code rate, suitable for a current scenario and a current phase may be adaptively determined based on one or more factors such as the connection status information between the first node and the plurality of second nodes and/or the training phase corresponding to the local model parameter information, to reduce interference caused by noise in an over-the-air superimposition process, improve quality of the fused information, and ensure information transmission efficiency as much as possible.

In a possible implementation of the first aspect, the connection status information between the first node and the plurality of second nodes includes one or more of the following information: link quality information between the first node and each second node, and a quantity of second nodes.

In a possible implementation of the first aspect, the coding scheme corresponding to each second node includes a code rate, and all the second nodes correspond to a same code rate; link quality indicated by the link quality information is in a positive correlation with the code rate; and the quantity of second nodes is in a positive correlation with the code rate.

In this possible implementation, that link quality indicated by the link quality information is in a positive correlation with the code rate indicates that if the link quality improves, the code rate of the second node tends to increase. An example in which a link quality indicator is a signal-to-noise ratio SNR is used for description. If an SNR of a link between a second node and the first node is relatively high, quality of the link between the second node and the first node is relatively good. In this case, even if the code rate is relatively high, relatively good link quality can still ensure quality of data obtained through decoding after transmission. Therefore, when link quality is relatively good, a relatively high code rate is tended to be selected, to improve transmission efficiency, and also ensure relatively good data quality.

In addition, that the quantity of second nodes is in a positive correlation with the code rate indicates that if the quantity of second nodes increases, the code rate of the second node tends to increase. When there are a relatively large quantity of second nodes, during over-the-air superimposition, useful information in the first parameter information corresponding to all the second nodes is enhanced. Because noise is usually random noise and is not significantly enhanced, if there are a relatively large quantity of second nodes, quality of the fused information obtained through over-the-air superimposition is usually relatively good. In this case, even if the code rate is relatively high, the quality of the fused information can still be ensured, thereby ensuring quality of data obtained through decoding after transmission. Therefore, if there are a relatively large quantity of second nodes, a relatively high code rate is tended to be selected, to improve transmission efficiency, and also ensure relatively good data quality. If there are a relatively small quantity of second nodes, a relatively low code rate may be used, to ensure quality of data obtained through decoding after transmission.

In a possible implementation of the first aspect, the coding scheme corresponding to each second node includes a code rate, and all the second nodes correspond to a same code rate; and a round corresponding to the training phase is in a negative correlation with the code rate.

In this possible implementation, that a round corresponding to the training phase is in a negative correlation with the code rate indicates that if the round corresponding to the training phase increases, the code rate of the second node tends to increase.

For example, when a value of the round of generating the local model parameter information is relatively small, it may be considered that the training phase is an early training phase. In this case, performance of a machine learning model corresponding to the local model parameter information is usually still relatively poor, in other words, precision of the local model parameter information is still relatively poor. Therefore, even if the code rate is relatively high and consequently quality of data obtained through decoding after transmission is usually relatively poor and the data may have a relatively large quantity of error codes, no relatively large impact is caused on a progress of a training process.

When a value of the round of generating the local model parameter information is relatively large, it may be considered that the training phase is a late training phase. In this case, a machine learning model corresponding to the local model parameter information gradually tends to converge, and performance of the machine learning model is already relatively good, in other words, precision of the local model parameter information is relatively good. Therefore, in this case, the code rate may be reduced, so that quality of data obtained through decoding after transmission is improved, to ensure that updated model parameter information obtained after decoding is relatively accurate.

In a possible implementation of the first aspect, the coding scheme corresponding to each second node is described by using a coding matrix of a real number field corresponding to the second node, and coding matrices corresponding to different second nodes have a same size.

In this possible implementation, that coding matrices corresponding to different second nodes have a same size indicates that the local model parameter information corresponding to all the second nodes corresponds to a same code length, and the coding schemes corresponding to all the second nodes have a same code rate. In this way, lengths of the first parameter information corresponding to all the second nodes are usually consistent, to implement over-the-air superimposition of all the first parameter information.

In a possible implementation of the first aspect, coding matrices corresponding to different second nodes have different content.

In this possible implementation, any second node usually does not learn of a specific coding scheme corresponding to another second node. Even if the second node obtains first parameter information sent by another second node, because the second node cannot determine specific content of a coding matrix corresponding to the another second node, the second node cannot decode the first parameter information, and therefore cannot learn of local model parameter information corresponding to the another second node. It can be learned that, in this possible implementation, confidentiality of the local model parameter information of each second node can be improved, and information security of each second node can be ensured.

In a possible implementation of the first aspect, each column in the coding matrix includes at most one non-zero element.

In this possible implementation, in an example, the coding matrix may include one or more diagonal matrices. In this case, the non-zero element in each column of the coding matrix is arranged on a diagonal of the coding matrix. Alternatively, in some other examples, each column includes at most one non-zero element, but the non-zero element may not be arranged on a diagonal.

In a possible implementation of the first aspect, the second parameter information includes updated model parameter information obtained by the first node based on the fused information and the coding schemes corresponding to the second nodes.

In this possible implementation, the first node may perform parameter estimation based on the fused information and the coding schemes corresponding to all the second nodes by using an approximate message passing (approximate message passing, AMP) algorithm or a linear minimum mean square error (linear minimum mean square error, LMMSE) algorithm, to obtain the updated model parameter information.

In a possible implementation of the first aspect, all the second nodes correspond to a same coding scheme, and the second parameter information includes the fused information, so that each second node obtains the updated model parameter information based on the fused information and the coding scheme.

In this possible implementation, the first node may broadcast the second parameter information, so that all the second nodes can conveniently and efficiently receive the second parameter information.

A second aspect of this application provides a data processing method. The method is applied to a second node, and the second node and at least one other second node are separately connected to a first node through wireless channels. The method includes: sending first parameter information of the second node to the first node, so that over-the-air superimposition is performed on the first parameter information of the second node and first parameter information sent by all other second nodes, to obtain fused information, where the first parameter information sent by the second node is obtained by the second node by encoding corresponding local model parameter information in a corresponding coding scheme; receiving second parameter information from the first node, where the second parameter information is obtained by the first node based on the fused information; and obtaining updated model parameter information based on the second parameter information.

It may be understood that, that the method may be applied to a second node indicates that the method may be applied to a communication device that serves as the first node, or a chip (system) on the communication device. In addition, the sending first parameter information to the first node indicates a transmission direction of the first parameter information and that the first node is a destination, and includes directly sending the first parameter information to the first node, or includes indirectly sending the first parameter information to the first node through a transmitter.

In a possible implementation of the second aspect, the method further includes: receiving information about the coding scheme corresponding to the second node from the first node.

In a possible implementation of the second aspect, the coding scheme corresponding to the second node is described by using a coding matrix of a real number field corresponding to the second node, and a size of the coding matrix corresponding to the second node is the same as a size of a coding matrix corresponding to each of the other second nodes.

In a possible implementation of the second aspect, content of the coding matrix corresponding to the second node is different from content of a coding matrix corresponding to any one of the other second nodes.

In a possible implementation of the second aspect, each column in the coding matrix of the second node includes at most one non-zero element.

In a possible implementation of the second aspect, the second parameter information includes the updated model parameter information.

In a possible implementation of the second aspect, the coding scheme corresponding to the second node is the same as a coding scheme corresponding to each of the other second nodes, and the second parameter information includes the fused information. The foregoing step of obtaining updated model parameter information based on the second parameter information includes: obtaining the updated model parameter information based on the fused information and the coding scheme.

A third aspect of this application provides a data processing apparatus. The apparatus has a function of implementing the method according to any one of the first aspect or the possible implementations of the first aspect. The function may be implemented by using hardware, or may be implemented by using hardware executing corresponding software. The hardware or the software includes one or more modules corresponding to the foregoing function, for example, a receiving module, a sending module, and a processing module. As an example, the processing module may be a processor, the receiving module may be a receiver or an input interface, and the sending module may be a transmitter or an output interface. In addition, the receiving module and the sending module may be combined into a transceiver module, a transceiver, or a communication interface. It may be understood that, if the data processing apparatus is a communication device, the receiver, the transmitter, or the transceiver may be implemented by using an antenna, a feeder, a codec, and the like in the apparatus; or if the data processing apparatus is a chip disposed in the device, the receiving module may be an input interface, an input circuit, a pin, or the like of the chip, and the sending module may be an output interface, an output circuit, a pin, or the like of the chip.

A fourth aspect of this application provides a data processing apparatus. The data processing apparatus includes at least one processor, a memory, and computer-executable instructions that are stored in the memory and that can be run on the processor. When the computer-executable instructions are executed by the processor, the processor performs the method according to any one of the first aspect or the possible implementations of the first aspect.

A fifth aspect of this application provides a computer-readable storage medium storing one or more computer-executable instructions. When the computer-executable instructions are executed by a processor, the processor performs the method according to any one of the first aspect or the possible implementations of the first aspect.

A sixth aspect of this application provides a computer program product that stores one or more computer-executable instructions. The computer program product includes the computer-executable instructions. When the computer-executable instructions are executed by a processor, the processor performs the method according to any one of the first aspect or the possible implementations of the first aspect.

A seventh aspect of this application provides a chip system. The chip system includes a processor, configured to support a data processing apparatus in implementing the function in any one of the first aspect or the possible implementations of the first aspect. In a possible design, the chip system may further include a memory. The memory is configured to store program instructions and data that are necessary for the data processing apparatus. The chip system may include a chip, or may include a chip and another discrete component.

An eighth aspect of this application provides a data processing apparatus. The apparatus has a function of implementing the method according to any one of the second aspect or the possible implementations of the second aspect. The function may be implemented by using hardware, or may be implemented by using hardware executing corresponding software. The hardware or the software includes one or more modules corresponding to the foregoing function, for example, a sending module, a receiving module, and a processing module. As an example, the processing module may be a processor, the receiving module may be a receiver or an input interface, and the sending module may be a transmitter or an output interface. In addition, the receiving module and the sending module may be combined into a transceiver module, a transceiver, or a communication interface. It may be understood that, if the data processing apparatus is a communication device, the receiver, the transmitter, or the transceiver may be implemented by using an antenna, a feeder, a codec, and the like in the apparatus; or if the data processing apparatus is a chip disposed in the device, the receiving module may be an input interface, an input circuit, a pin, or the like of the chip, and the sending module may be an output interface, an output circuit, a pin, or the like of the chip.

A ninth aspect of this application provides a data processing apparatus. The data processing apparatus includes at least one processor, a memory, and computer-executable instructions that are stored in the memory and that can be run on the processor. When the computer-executable instructions are executed by the processor, the processor performs the method according to any one of the second aspect or the possible implementations of the second aspect.

A tenth aspect of this application provides a computer-readable storage medium storing one or more computer-executable instructions. When the computer-executable instructions are executed by a processor, the processor performs the method according to any one of the second aspect or the possible implementations of the second aspect.

An eleventh aspect of this application provides a computer program product that stores one or more computer-executable instructions. The computer program product includes the computer-executable instructions. When the computer-executable instructions are executed by a processor, the processor performs the method according to any one of the second aspect or the possible implementations of the second aspect.

A twelfth aspect of this application provides a chip system. The chip system includes a processor, configured to support a data processing apparatus in implementing the function in any one of the second aspect or the possible implementations of the second aspect. In a possible design, the chip system may further include a memory. The memory is configured to store program instructions and data that are necessary for the data processing apparatus. The chip system may include a chip, or may include a chip and another discrete component.

For technical effects brought by any one of the second aspect to the twelfth aspect or the possible implementations of the second aspect to the twelfth aspect, refer to the technical effects brought by the first aspect or the related possible implementations of the first aspect. Details are not described herein again.

## BRIEF DESCRIPTION OF DRAWINGS

FIG. 1 is an example interaction diagram of a plurality of nodes in federated learning according to an embodiment of this application;

FIG. 2 is a diagram of an embodiment of a data processing method according to an embodiment of this application;

FIG. 3 is an example diagram of information transmission operations between a first node and second nodes according to an embodiment of this application;

FIG. 4 is a diagram of an embodiment of a data processing method according to an embodiment of this application;

FIG. 5a is an example diagram of a diagonal matrix in a coding matrix according to an embodiment of this application;

FIG. 5b is another example diagram of a diagonal matrix in a coding matrix according to an embodiment of this application;

FIG. 6 is an example diagram of information exchange between a plurality of second nodes and a first node according to an embodiment of this application;

FIG. 7a is an example diagram of an emulation and verification result according to an embodiment of this application;

FIG. 7b is another example diagram of an emulation and verification result according to an embodiment of this application;

FIG. 8 is a diagram of an embodiment of a data processing apparatus according to an embodiment of this application;

FIG. 9 is a diagram of an embodiment of a data processing apparatus according to an embodiment of this application;

FIG. 10 is a diagram of a structure of a data processing apparatus according to an embodiment of this application; and

FIG. 11 is a diagram of a structure of a data processing apparatus according to an embodiment of this application.

## DESCRIPTION OF EMBODIMENTS

The following describes embodiments of this application with reference to the accompanying drawings. A person of ordinary skill in the art may learn that, with development of technologies and emergence of new scenarios, technical solutions provided in embodiments of this application are also applicable to a similar technical problem.

In this application, "at least one" means one or more, and "a plurality of" means two or more. The term "and/or" describes an association relationship between associated objects and indicates that three relationships may exist. For example, A and/or B may indicate the following cases: Only A exists, both A and B exist, and only B exists, where A and B may be singular or plural. The character "/" generally indicates an "or" relationship between the associated objects. The expression "at least one of the following items" or a similar expression thereof indicates any combination of these items, including a single item or any combination of a plurality of items. In the specification, claims, and accompanying drawings of this application, the terms such as "first" and "second" are intended to distinguish between similar objects but do not necessarily describe a specific order or sequence. It should be understood that the terms used in such a way are interchangeable in proper circumstances, and this is merely a distinguishing manner used when objects with a same attribute are described in embodiments of this application. In addition, the terms "include", "have", and any other variants thereof are intended to cover non-exclusive inclusion, so that a process, method, system, product, or device that includes a series of units is not necessarily limited to those units, but may include other units not expressly listed or inherent to such a process, method, product, or device.

With continuous development of technologies, a quantity and types of electronic devices explode. In an actual application process, to obtain relatively good task processing performance, a same task usually needs to be jointly completed through coordination and cooperation between a plurality of nodes, for example, a plurality of devices.

For example, in a federated learning scenario, a learning task of a machine learning model may be efficiently completed through coordination and cooperation between a plurality of nodes on a premise that user data privacy and security are fully ensured.

The following provides descriptions by using the federated learning scenario as an example. It may be understood that embodiments of this application provide descriptions by using federated learning as an example, but are not limited to the federated learning scenario. In another example, embodiments of this application may be further applied to another multi-node interaction scenario other than federated learning.

Federated learning is an artificial intelligence (artificial intelligence, AI) technology. Federated learning aims to implement efficient machine learning between a plurality of nodes on a premise of ensuring information security during big data exchange, protecting terminal data and personal data privacy, and ensuring legality and compliance. In a training scenario of federated learning, a machine learning model may be jointly trained by using data of a plurality of nodes without leaking plaintext data of the plurality of nodes, to construct a global machine learning model, so that data is available but invisible.

In embodiments of this application, a type and a structure of a machine learning model in federated learning are not limited herein. For example, the machine learning model may be one or a combination of a plurality of a neural network (neural network, NN), a support vector machine, a decision tree, a random forest, logistic regression, and the like. After training is completed, image processing, text processing, speech recognition, or another function may be implemented by using the machine learning model.

Federated learning relates to information exchange between a plurality of nodes.

Any one of the plurality of nodes may be a server such as a cloud server or an edge server, or a server cluster, may be a network device such as a base station, or may be a terminal device, a virtual machine (virtual machine, VM), a container (container), or the like. All the nodes may be of a same type, or may be of different types.

In embodiments of this application, the plurality of nodes may include a first node and a plurality of second nodes.

Each second node may include a locally collected local dataset, and may train a machine learning model based on the local dataset, to obtain local model parameter information such as a weight of the machine learning model. In addition, the local model parameter information of each second node may be transmitted to the first node. This can avoid leakage of the local dataset, to effectively ensure information security of each second node.

The first node may receive the local model parameter information sent by each second node, to fuse all local model parameter information to obtain global model parameter information, and use the global model parameter information as updated model parameter information and transmit the updated model parameter information to each second node.

For example, in some scenarios, an example procedure of federated learning is as follows:

A training process of the federated learning includes T rounds. In each round, second nodes traverse corresponding local datasets once to perform one round of training on machine learning models.

In an $i^{th}$ ($i \in [1, T]$) round of the training process, a second node m trains a local machine learning model based on a local dataset in the second node m, to obtain a local model parameter set of the $i^{th}$ round:

$$\boldsymbol{g}_i^{l,m} = \left( g_{i,1}^{l,m}, g_{i,2}^{l,m}, ..., g_{i,\gamma}^{l,m} \right) \in \mathbb{R}^{\gamma \times 1} \text{ , where}$$

$m = 1, 2, ..., M$. The superscript l in $\boldsymbol{g}_i^{l,m}$ means local, in other words, $\boldsymbol{g}^l$ indicates a local model parameter $\boldsymbol{g}$. T is a total quantity of rounds in the training process. M is a quantity of second nodes. m indicates an $m^{th}$ second node in the M second nodes, namely, the second node m. $\gamma$ is a quantity of local model parameters of the $i^{th}$ round. In other words, the local model parameter set $\boldsymbol{g}_i^{l,m}$ in-

cludes information about $\gamma$ local model parameters:

$g_{i,1}^{l,m}, g_{i,2}^{l,m}$ , ... , and $g_{i,\gamma}^{l,m}$ .

Each second node transmits local model parameter information that is of the second node and that is obtained after the $i^{th}$ round of training to the first node.

The first node summarizes local model parameter information from all the second nodes, and may obtain a new global model parameter set

$$\boldsymbol{g}_{i+1}^{f} = \left( g_{i+1,1}^{f}, g_{i+1,2}^{f}, ..., g_{i+1,\gamma}^{f} \right) \in \mathbb{R}^{\gamma \times 1}$$

through weighted summation and then averaging. The superscript f in $\boldsymbol{g}_{i+1}^{f}$ means global, in other words, $\boldsymbol{g}^f$ indicates a global model parameter $\boldsymbol{g}$. The global model parameter set $\boldsymbol{g}_{i+1}^{f}$ includes information about $\gamma$ global model parameters: $g_{i+1,1}^{f}, g_{i+1,2}^{f}$ , ... , and $g_{i+1,\gamma}^{f}$ .

The global model parameter

$g_{i+1,1}^{f} = \frac{\sum_{m=1}^{M} g_{i,1}^{l,m}}{M}$ , to be specific, a $1^{st}$ model parameter in the global model parameter set is an average value of respective $1^{st}$ local model parameters of the M second nodes. Other model parameters ( $g_{i+1,2}^{f}$ , ... , and $g_{i+1,\gamma}^{f}$ ) in the global model parameter set may be obtained with reference to the obtaining manner of the $1^{st}$ model parameter ( $g_{i+1,1}^{f}$ ) in the global model parameter set.

A $k^{th}$ global model parameter in the global model parameter set is an average value of respective $k^{th}$ local model parameters in M local model parameter sets, and $k \in [1, \gamma]$. Therefore, the global model parameter set may be indicated as $\boldsymbol{g}_{i+1}^{f} = \frac{\sum_{m=1}^{M} \boldsymbol{g}_i^{l,m}}{M}$ . The global model parameter is updated model parameter information.

Then, the first node may send the updated model parameter information to each second node, to update a machine learning model in each second node.

The foregoing procedure steps are repeated until a machine learning model finally converges or a quantity of training rounds reaches the upper limit T.

The first node is connected to each second node through a wireless channel.

There may be a plurality of wireless connection manners between the first node and the second node, and a specific type of the wireless channel is not limited herein.

For example, the first node and any second node may perform wireless communication based on one or more of communication technologies such as a narrowband internet of things (narrowband internet of things, NB-IoT), a global system for mobile communications (global system for mobile communications, GSM), code division multiple access (code division multiple access, CDMA) IS-95, code division multiple access (code division multiple access, CDMA) 2000, time division-synchronous code division multiple access (time division-synchronous code division multiple access, TD-SCDMA), wideband code division multiple access (wideband code division multiple access, WCDMA), long term evolution (long term evolution, LTE), time division duplexing-long term evolution (time division duplexing-long term evolution, TDD LTE), frequency division duplexing-long term evolution (frequency division duplexing-long term evolution, FDD LTE), long term evolution-advanced (long term evolution-advanced, LTE-advanced), a personal handy-phone system (personal handy-phone system, PHS), wireless fidelity (wireless fidelity, Wi-Fi) specified in 802.11 series protocols, a 5th generation mobile communication technology (5th Generation Mobile Communication Technology, 5G), new radio (new radio, NR), an enhanced mobile broadband (enhanced mobile broadband, eMBB), ultra-reliable and low latency communications (ultra-reliable and low latency communications, URLLC), and enhanced machine type communication (enhanced machine type communication, eMTC), or may perform wireless communication based on another communication technology that is subsequently developed.

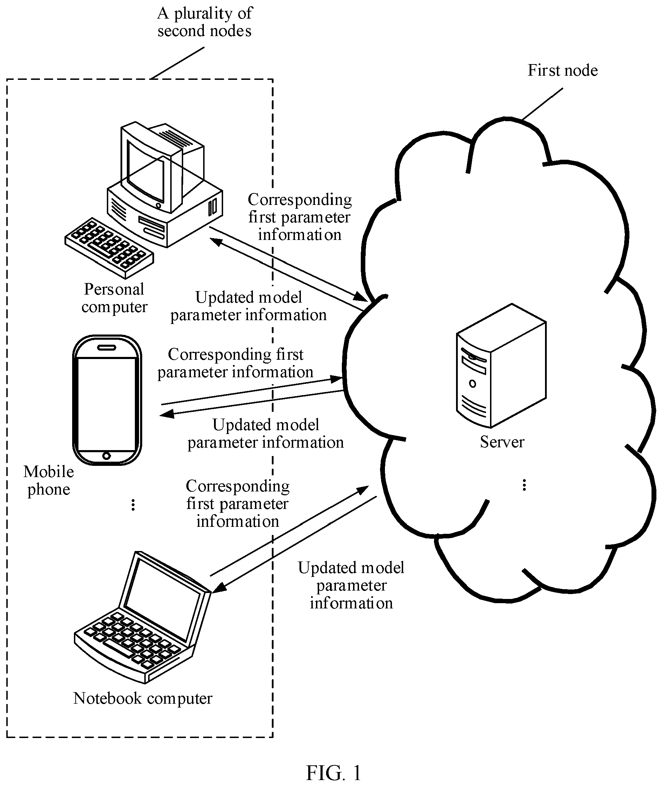

FIG. 1 is an example interaction diagram of a plurality of nodes in federated learning.

In this example, a first node may be a single server or a server cluster, or may be a network device such as a base station. Any second node may be a terminal device.

A type of the terminal device is not limited herein either. For example, the terminal device may be one or a combination of a plurality of a mobile phone (mobile phone), a tablet computer (pad), a computer with a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a wireless terminal in an internet of things (internet of things, IoT), a wearable device, and the like.

In the example shown in FIG. 1, a plurality of second nodes may include a personal computer, a mobile phone, a notebook computer, and another type.

A wireless connection may be established between the first node and the second node, so that the second node may transmit local model parameter information to the first node, and the first node may send updated model parameter information to the second node. In this case, the first node may send the updated model parameter information to all the second nodes in a broadcast manner or a point-to-point manner.

In this example, the first node usually has no local dataset, and does not perform local training on a machine learning model, but obtains the updated model parameter information based on received respective local model parameter information of all the second nodes.

In addition, in some examples, the first node may alternatively be a terminal device. The first node may alternatively collect a local dataset, and train a machine learning model based on the local dataset of the first node, to obtain corresponding local model parameter information, so that the first node may obtain the updated model parameter information based on the local model parameter information of the first node and local model parameter information of all the second nodes.

Currently, after obtaining corresponding local model parameter information, any second node usually quantizes the local model parameter information, performs a series of operations such as source coding, channel coding, modulation, and symbol mapping to obtain a to-be-sent signal, and then sends the signal to the first node. After receiving a signal sent by each second node, the first node needs to perform operations such as symbol demapping, demodulation, and decoding on the signal sent by each second node, to recover local model parameter information carried in each signal, and then process all local model parameter information to obtain updated model parameter information. This manner is time-consuming and has relatively high processing complexity.

However, if over-the-air superimposition is directly performed on the local model parameter information of all the second nodes by using an over-the-air computation technology, transmission efficiency can be improved. However, direct superimposition of a plurality of signals that carry respective corresponding local model parameter information cannot effectively resist noise. Consequently, data received by the first node has great interference and is inaccurate, and therefore updated model parameter information obtained by the first node is inaccurate. As a result, a machine learning model is difficult to converge, training is time-consuming, and even the machine learning model cannot converge finally.

Based on this, embodiments of this application provide a data processing method. In a scenario such as federated learning, according to the method, model-parameter-related information exchange can be efficiently performed between a first node and a second node, and accurate updated model parameter information can be obtained based on an efficient information exchange process, thereby reducing noise interference, and improving training efficiency.

It should be noted that, in "sending information to A" in this application, "to A" merely indicates a transmission direction of the information and that A is a destination. There is no limitation that "sending information to A" is definitely sending on an air interface. "sending information to A" includes directly sending the information to A, or includes indirectly sending the information to A through a transmitter. Therefore, "sending information to A" may also be understood as "outputting information destined for A". Similarly, "receiving information from A" indicates that a source of the information is A, and includes directly receiving the information from A, or includes indirectly receiving the information from A through a receiver. Therefore, "receiving information from A" may also be understood as "inputting information from A".

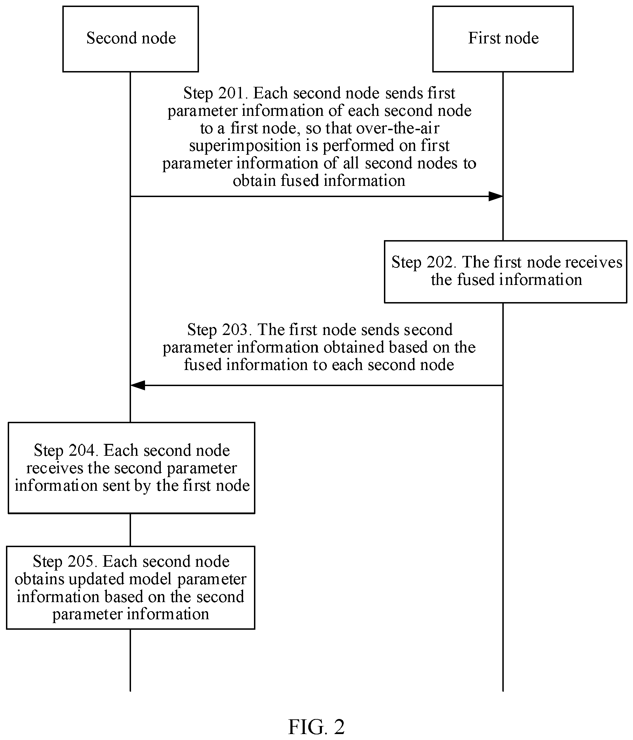

As shown in FIG. 2, based on the foregoing system, an embodiment of this application provides a data processing method. The method includes steps 201 to 205.

Step 201. Each second node sends first parameter information of each second node to a first node, so that over-the-air superimposition is performed on first parameter information of all second nodes to obtain fused information.

The first parameter information sent by each second node is obtained by the corresponding second node by encoding corresponding local model parameter information in a corresponding coding scheme.

In this embodiment of this application, a parameter type in the local model parameter information of each second node may be determined based on a type, a structure, and the like of a machine learning model. For example, the local model parameter information may include weight information or the like in a machine learning model obtained after a training phase ends, or the local model parameter information may include information about a machine learning model obtained after a training phase ends. Generally, local model parameter information of all the second nodes usually has a same parameter type, but each parameter may correspond to different specific values based on respective different local datasets of all the second nodes.

After obtaining corresponding local model parameter information, any second node may encode the corresponding local model parameter information based on a corresponding coding scheme, to obtain corresponding first parameter information.

A coding scheme corresponding to any second node may be sent by the first node, or may be preconfigured by a related person. All the second nodes may correspond to a same coding scheme, or may correspond to different coding schemes.

A coding scheme corresponding to any second node may include a code rate corresponding to the corresponding first node, or other information. In some examples, a coding matrix corresponding to each second node may be further used to describe the coding scheme of the corresponding second node. A size of the coding matrix may be K*L. K is a preset code length, and the preset code length may be a preset fixed value. L is a code length obtained after coding. K/L is a code rate corresponding to the corresponding second node.

In this case, for any second node, local model parameter information may be segmented based on a preset code length, to obtain one or more subsequences. A length of each subsequence is the preset code length. Then, each subsequence is coded through matrix multiplication between the subsequence and a corresponding coding matrix, or in another manner, to obtain a coded subsequence. All coded subsequences are combined to obtain first parameter information of the second node.

An occasion on which the second node generates the first parameter information is not limited herein.

For example, in a training process of a machine learning model, after completing a round of training on a machine learning model based on a local dataset of each second node and obtaining local model parameter information obtained after the round of training, each second node may generate corresponding first parameter information, to perform the foregoing step 201 and subsequent steps. Alternatively, in a training process of a machine learning model, each second node periodically generates corresponding first parameter information by using n rounds as a cycle, to trigger execution of the foregoing step 201 and subsequent steps. n is an integer greater than 1. In each training round, a local dataset of the corresponding second node is traversed once.

In this embodiment of this application, after obtaining the corresponding first parameter information based on the corresponding local model parameter information and corresponding coding schemes, all the second nodes may synchronously send the respective first parameter information to the first node based on a specified instruction, so that over-the-air superimposition may be performed on all the first parameter information based on an over-the-air computation technology.

In this embodiment of this application, in the over-the-air computation (over-the-air computation) technology, a waveform superimposition attribute of signals in a transmission process is used to implement summation, average value calculation, maximum/minimum value calculation, and the like of the signals in the transmission process, thereby greatly reducing a calculation delay, and improving calculation efficiency.

A specific implementation of the over-the-air computation technology used in this embodiment of this application may be implemented based on current and subsequently developed related technologies. This is not limited herein in this embodiment of this application. For example, a synchronization mechanism for implementing synchronous sending by all the second nodes may be implemented in a plurality of manners. For example, the first node may trigger all the second nodes to synchronously send the respective first parameter information, so that over-the-air superimposition is performed on all the first parameter information on wireless channels to obtain the fused information.

In this embodiment of this application, the fused information may be considered as a result of simply superimposing or a result obtained after weighted summation is performed on the first parameter information respectively corresponding to all the second nodes.

Step 202. The first node receives the fused information.

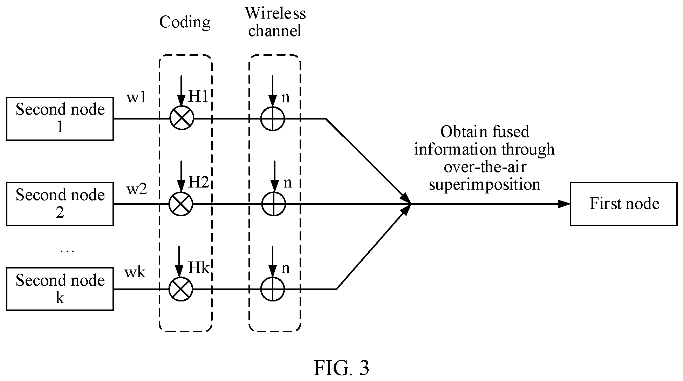

For example, FIG. 3 is an example diagram of information transmission operations between a first node and second nodes.

Each second node corresponds to a coding matrix, to describe a corresponding coding scheme by using the coding matrix. Specifically, a second node 1 corresponds to a coding matrix H1, a second node 2 corresponds to a coding matrix H2, and a second node k corresponds to a coding matrix Hk.

After a current round of training, each second node obtains local model parameter information corresponding to the second node. Specifically, the second node 1 corresponds to local model parameter information w1, the second node 2 corresponds to local model parameter information w2, and the second node k corresponds to local model parameter information wk.

All the second nodes perform coding based on respective coding matrices and local model parameter information, and then synchronously transmit first parameter information obtained after the coding to the first node, so that over-the-air superimposition is performed on all the first parameter information, and the first node can obtain fused information. When the first parameter information is transmitted, noise n is usually introduced.

Step 203. The first node sends second parameter information obtained based on the fused information to each second node.

The second parameter information is used by each second node to obtain updated model parameter information.

In this embodiment of this application, after receiving the fused information, the first node may obtain the second parameter information based on the fused information.

Specific content of the second parameter information is not limited herein.

In an embodiment, the second parameter information includes updated model parameter information obtained by the first node based on the fused information and coding schemes corresponding to the second nodes.

In this embodiment of this application, the first node may perform parameter estimation based on the fused information and the coding schemes corresponding to all the second nodes to obtain the updated model parameter information.

A specific manner of performing parameter estimation based on fused information and the coding schemes corresponding to all the second nodes to obtain the updated model parameter information is not limited herein.

For example, parameter estimation may be performed by using an approximate message passing (approximate message passing, AMP) algorithm. For a parameter, parameter estimation is performed by using the AMP algorithm, to obtain an average value of parameter values of all the second nodes about the parameter. The average value may be used as an updated parameter value corresponding to the parameter. In this way, the updated model parameter information may include the updated parameter value of the parameter.

Alternatively, parameter estimation may be performed by using a linear minimum mean square error (linear minimum mean square error, LMMSE) algorithm. For a parameter, parameter estimation is performed by using the LMMSE algorithm, to estimate respective parameter values of all the second nodes about the parameter. Then, the first node may calculate an average value of the respective parameter values of all the second nodes about the parameter. The average value may be used as an updated parameter value corresponding to the parameter. In this way, the updated model parameter information may include the updated parameter value of the parameter.

It can be learned that the first node may predetermine the coding scheme corresponding to each second node, so that the first node may perform parameter estimation based on the fused information and the coding schemes corresponding to all the second nodes to obtain the updated model parameter information.

In an embodiment, the second parameter information includes the fused information, so that each second node obtains the updated model parameter information based on the fused information and the coding scheme.

In this embodiment of this application, all the second nodes correspond to a same coding scheme. In this way, each second node may perform parameter estimation based on the coding scheme and the fused information by using an AMP algorithm, an LMMSE algorithm, or the like, to obtain the updated model parameter information.

Alternatively, in some examples, all the second nodes correspond to different coding schemes, but each second node pre-obtains the coding schemes of all the second nodes. In this case, any second node may also perform parameter estimation based on the pre-determined coding schemes of all the second nodes and the fused information by using an AMP algorithm, an LMMSE algorithm, or the like, to obtain the updated model parameter information.

In some examples, the first node may broadcast the second parameter information, so that all the second nodes can conveniently and efficiently receive the second parameter information, and the first node does not to perform point-to-point information transmission.

Step 204. Each second node receives the second parameter information sent by the first node.

In this embodiment of this application, any second node may receive the second parameter information sent by the first node in a broadcast manner or a point-to-point manner.

Step 205. Each second node obtains the updated model parameter information based on the second parameter information.

In this embodiment of this application, the updated model parameter information is obtained based on the fused information and the coding schemes corresponding to all the second nodes.

If the second parameter information includes the updated model parameter information, each second node may directly obtain the updated model parameter information based on the second parameter information. If the second parameter information includes the fused information, the second node needs to perform parameter estimation based on the fused information and the coding schemes corresponding to all the second nodes to obtain the updated model parameter information.

After obtaining the updated model parameter information, the second node may update a machine learning model in the second node based on the updated model parameter information. If training of the machine learning model does not end, the second node may perform a subsequent training step based on an updated machine learning model. If the machine learning model converges or a quantity of training times reaches a preset time quantity threshold, the second node may use the updated machine learning model as a trained machine learning model, and may perform subsequent application. For example, the trained machine learning model may be deployed in the second node, to perform image processing, voice processing, text processing, or another task; or the second node may send the trained machine learning model to another node.

In this embodiment of this application, over-the-air superimposition is performed on the first parameter information sent by all the second nodes, to obtain the fused information, so that the first node can directly and efficiently obtain the fused information, thereby greatly improving efficiency of obtaining the fused information by the first node.

In addition, the first parameter information sent by each second node is obtained by the corresponding second node by encoding the local model parameter information of the corresponding second node in the coding scheme corresponding to the corresponding second node. In this way, the updated model parameter information may be obtained based on the fused information and the coding schemes respectively corresponding to all the second nodes. Compared with a manner in which the first node directly fuses the local model parameter information of all the second nodes, in this embodiment of this application, noise in a wireless transmission process has relatively small impact on updated model parameter information obtained by encoding and then fusing the respective local model parameter information of all the second nodes and then performing parameter estimation based on the fused information, and the updated model parameter information is relatively accurate, thereby reducing impact of an error caused by channel noise between the second node and the first node on a training process in the second node, and improving a training speed in the second node.

In addition, in this embodiment of this application, the respective coding schemes of all the second nodes may be further optimized, to dynamically adjust the respective coding schemes of all the second nodes based on different application scenario requirements, thereby reducing interference caused by noise in an over-the-air superimposition process, and improving quality of the fused information.

The following specifically describes, by using embodiments, a method of determining the coding schemes respectively corresponding all the second nodes.

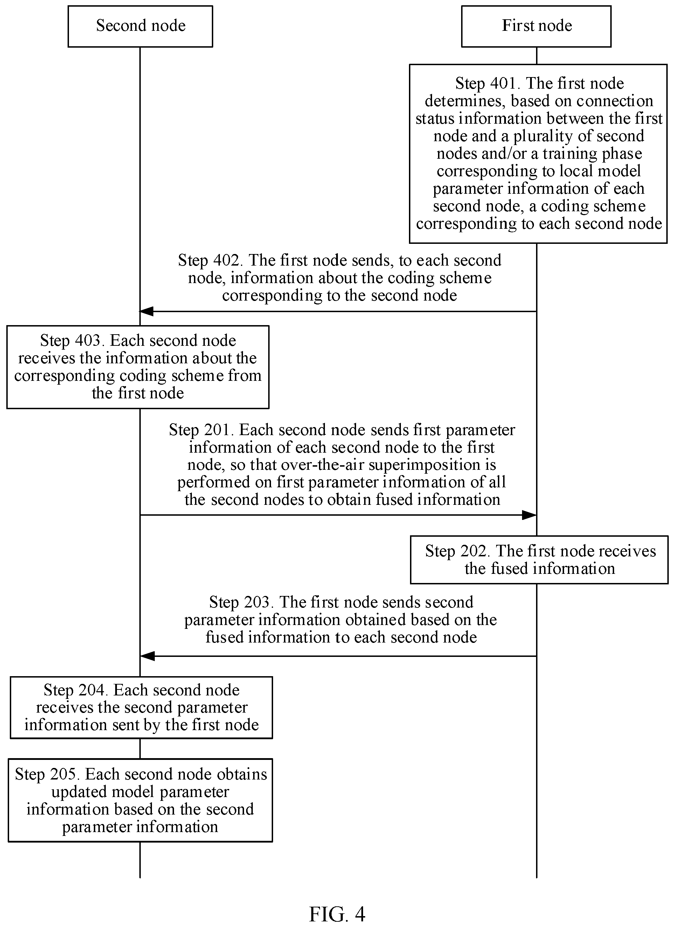

As shown in FIG. 4, in some embodiments, before step 201 is performed, the method further includes steps 401 to 403.

Step 401. The first node determines, based on connection status information between the first node and the plurality of second nodes and/or a training phase corresponding to the local model parameter information of each second node, the coding scheme corresponding to each second node.

Step 402. The first node sends, to each second node, information about the coding scheme corresponding to the second node.

Step 403. Each second node receives the information about the corresponding coding scheme from the first node.

In this embodiment of this application, that each second node receives the information about the corresponding coding scheme from the first node indicates that the information about the corresponding coding scheme is sent by the first node.

The connection status information between the first node and the plurality of second nodes may indicate one or more of connection relationship information, related-link information, and the like between the first node and the plurality of second nodes.

In some embodiments, the connection status information between the first node and the plurality of second nodes includes one or more of the following information:

link quality information between the first node and each second node, and a quantity of second nodes.

Link quality information between the first node and any second node is used to describe quality of a link between the first node and the second node. In some examples, link quality information between the first node and any second node may be specifically link quality information of an uplink from the second node to the first node.

The link quality may be described by using information about one or more link quality indicators. A type of the link quality indicator in the link quality information is not limited herein.

For example, the link quality indicator in the link quality information may include one or more of the following indicators:

a signal-to-noise ratio (signal-to-noise ratio, SNR), a packet loss rate, a transmission rate, and a bandwidth.

The SNR is used as an example for description.

In this example, link quality information between the first node and any second node may include an SNR of an uplink from the second node to the first node. If the SNR is relatively high, it indicates that quality of the link between the second node and the first node is relatively good.

A specific manner in which the first node obtains the link quality information is not limited herein.

For example, a second node may send a data packet to the first node through an uplink, and the first node determines link quality information of the uplink based on a receiving status of the data packet, or other information.

Alternatively, a second node may report link quality information between the second node and the first node to the first node based on a link quality detection result obtained through a pre-test.

The quantity of second nodes is specifically a quantity of second nodes in the plurality of second nodes, and is also a quantity of second nodes connected to the first node through wireless channels.

In some examples, the training phase corresponding to the local model parameter information of each second node may be described based on a round corresponding to the local model parameter information in a training process. For example, if a value of the round is relatively small (for example, less than 50), it may be considered that the training phase is an early training phase; or if a value of the round is relatively large (for example, greater than 50), it is considered that the training phase is a late training phase.

In this embodiment of this application, the coding scheme corresponding to each second node may be dynamically adjusted based on the connection status information such as the link quality information and/or the quantity of second nodes, the training phase, and/or another factor.

The coding scheme corresponding to each second node may include a code rate. To implement over-the-air superimposition of all the first parameter information, all the second nodes may correspond to a same code rate, so that the first parameter information that is of all the second nodes and that is obtained after coding has a same code length.

The code rate refers to a ratio of useful (non-redundant) part of a coded data stream to total coded data. In this embodiment of this application, the code rate may be a ratio of a quantity of bits of local model parameter information to a quantity of bits of first parameter information obtained after coding.

Specifically, if a code length of the local model parameter information is 1000, and a code length of the first parameter information obtained after coding is 2000, in this case, the code rate is 1000/2000=1/2. Usually, when other conditions are consistent, a higher code rate indicates higher transmission efficiency, but quality of data obtained through decoding after transmission is usually poor, and the data may have a relatively large quantity of error codes.

The following separately describes impact of the link quality information, the quantity of second nodes, the round corresponding to the training phase, and another factor on the code rate corresponding to the second node.

In some embodiments, link quality indicated by the link quality information is in a positive correlation with the code rate.

The quantity of second nodes is in a positive correlation with the code rate.

In this embodiment of this application, that link quality indicated by the link quality information is in a positive correlation with the code rate indicates that if the link quality improves, the code rate of the second node tends to increase.

An example in which a link quality indicator is a signal-to-noise ratio SNR is used for description.

If an SNR of a link between a second node and the first node is relatively high, quality of the link between the second node and the first node is relatively good. In this case, even if the code rate is relatively high, relatively good link quality can still ensure quality of data obtained through decoding after transmission. Therefore, when link quality is relatively good, a relatively high code rate is tended to be selected, to improve transmission efficiency, and also ensure relatively good data quality.

If an SNR of a link between a second node and the first node is relatively low, quality of the link between the second node and the first node is relatively poor, and more noise is introduced in a wireless transmission process. In this case, a relatively low code rate may be used, to reduce noise caused by an information transmission and decoding process, and ensure quality of data obtained through decoding after transmission.

For example, if an SNR of a wireless channel between a second node and the first node is 2 dB, and is in a state in which the signal-to-noise ratio is lower than a preset signal-to-noise ratio threshold, it may be determined that a code rate corresponding to the second node is a code rate 1/2. In this case, if a fixed code length is 1000, a size of a coding matrix corresponding to the second node is 1000x2000.

If an SNR of a wireless channel between a second node and the first node is 6 dB, and is in a state in which the signal-to-noise ratio is higher than the preset signal-to-noise ratio threshold, it may be determined that a code rate corresponding to the second node is a code rate 2/3. In this case, if a fixed code length is 1000, a size of a coding matrix corresponding to the second node is 1000x1500.

A relationship between the link quality indicator such as an SMR and the code rate may be a linear relationship, or may be a non-linear relationship such as an exponential relationship.

In this embodiment of this application, that the quantity of second nodes is in a positive correlation with the code rate indicates that if the quantity of second nodes increases, the code rate of the second node tends to increase.

In this embodiment of this application, when there are a relatively large quantity of second nodes (for example, the quantity of second nodes is greater than 3), during over-the-air superimposition, useful information in the first parameter information corresponding to all the second nodes is enhanced. Because noise is usually random noise and is not significantly enhanced, if there are a relatively large quantity of second nodes, quality of the fused information obtained through over-the-air superimposition is usually relatively good. In this case, even if the code rate is relatively high, the quality of the fused information can still be ensured, thereby ensuring quality of data obtained through decoding after transmission. Therefore, if there are a relatively large quantity of second nodes, a relatively high code rate is tended to be selected, to improve transmission efficiency, and also ensure relatively good data quality.

If there are a relatively small quantity of second nodes (for example, the quantity of second nodes is not greater than 3), a relatively low code rate may be used, to ensure quality of data obtained through decoding after transmission.

For example, if the quantity of second nodes is 2, and is in a state in which the quantity of second nodes is less than a preset quantity threshold, it may be determined that the code rate corresponding to the second node is a code rate 1/2. In this case, if a fixed code length is 1000, a size of the coding matrix corresponding to the second node is 1000x2000.

If the quantity of second nodes is 5, and is in a state in which the quantity of second nodes is greater than the preset quantity threshold, it may be determined that the code rate corresponding to the second node is a code rate 2/3. In this case, if a fixed code length is 1000, a size of the coding matrix corresponding to the second node is 1000x1500.

A relationship between the quantity of second nodes and the code rate may be a linear relationship, or may be a non-linear relationship such as an exponential relationship.

In some embodiments, the round corresponding to the training phase is in a negative correlation with the code rate.

In this embodiment of this application, that the round corresponding to the training phase is in a negative correlation with the code rate indicates that if the round corresponding to the training phase increases, the code rate of the second node tends to increase.

For example, when a value of the round of generating the local model parameter information is relatively small (for example, less than 50), it may be considered that the training phase is an early training phase. In this case, performance of a machine learning model corresponding to the local model parameter information is usually still relatively poor, in other words, precision of the local model parameter information is still relatively poor. Therefore, even if the code rate is relatively high and consequently quality of data obtained through decoding after transmission is usually relatively poor and the data may have a relatively large quantity of error codes, no relatively large impact is caused on a progress of a training process.

When a value of the round of generating the local model parameter information is relatively large (for example, greater than 50), it may be considered that the training phase is a late training phase. In this case, a machine learning model corresponding to the local model parameter information gradually tends to converge, and performance of the machine learning model is already relatively good, in other words, precision of the local model parameter information is relatively good. Therefore, in this case, the code rate may be reduced, so that quality of data obtained through decoding after transmission is improved, to ensure that updated model parameter information obtained after decoding is relatively accurate.

For example, if the round of generating the local model parameter information is in first 10 rounds of the training stage, it may be determined that the code rate corresponding to the second node is a code rate 2/3. In this case, if a fixed code length is 1000, a size of the coding matrix corresponding to the second node is 1000x1500.

If the round of generating the local model parameter information is in last 50 rounds of the training stage, it may be determined that the code rate corresponding to the second node is a code rate 1/2. In this case, if a fixed code length is 1000, a size of the coding matrix corresponding to the second node is 1000x2000.

A relationship between the round corresponding to the training phase and the code rate may be a linear relationship, or may be a non-linear relationship such as an exponential relationship.

It can be learned that, in this embodiment of this application, a coding parameter, for example, a code rate, suitable for a current scenario and a current phase may be adaptively determined based on one or more factors such as the link quality information, the quantity of second nodes, and/or the training phase corresponding to the local model parameter information, to reduce interference caused by noise in an over-the-air superimposition process, improve quality of the fused information, and ensure information transmission efficiency as much as possible.

In addition, in some embodiments, when the coding scheme, for example, the code rate, is determined based on a plurality of factors, the coding scheme may be comprehensively determined based on priorities, weights, and/or other information of all the factors. For example, a weight corresponding to the quantity of second nodes is the largest, and a weight corresponding to the link quality information is less than the weight corresponding to the quantity of second nodes and is greater than a weight corresponding to the training phase.

After determining the code rate or other information corresponding to each second node, the first node may obtain the information about the coding scheme corresponding to each second node. A specific description manner of the information about the coding scheme corresponding to each second node is not limited herein.

For example, in some embodiments, the coding scheme corresponding to each second node is described by using a coding matrix of a real number field corresponding to the second node, and coding matrices corresponding to different second nodes have a same size.

In this embodiment of this application, because a value of a parameter of the machine learning model is usually a real number, the coding matrix is a coding matrix of a real number field.

In this embodiment of this application, that coding matrices corresponding to different second nodes have a same size indicates that the local model parameter information corresponding to all the second nodes corresponds to a same code length, and the coding schemes corresponding to all the second nodes have a same code rate. In this way, lengths of the first parameter information corresponding to all the second nodes are usually consistent, to implement over-the-air superimposition of all the first parameter information.

Specific content of the coding matrix corresponding to each second node may be randomly generated in advance, or may be generated based on a specified coding algorithm or in another manner.

In some examples, coding matrices corresponding to all the second nodes have same content. In this case, all the second nodes encode the respective local model parameter information based on a same coding matrix, to obtain the respective corresponding first parameter information. In other words, in this case, any second node may learn of a coding scheme corresponding to another second node.

In some other examples, coding matrices corresponding to different second nodes have different content.

In this way, any second node usually does not learn of a specific coding scheme corresponding to another second node. Even if the second node obtains first parameter information sent by another second node, because the second node cannot determine specific content of a coding matrix corresponding to the another second node, the second node cannot decode the first parameter information, and therefore cannot learn of local model parameter information corresponding to the another second node. It can be learned that, in this example, confidentiality of the local model parameter information of each second node can be improved, and information security of each second node can be ensured.

In an embodiment, each column in the coding matrix includes at most one non-zero element.

In this embodiment of this application, a specific structure of the coding matrix may have a plurality of forms.

For example, the coding matrix may include one or more diagonal matrices. In this case, the non-zero element in each column of the coding matrix is arranged on a diagonal of the coding matrix.

Alternatively, in some other examples, each column includes at most one non-zero element, but the non-zero element may not be arranged on a diagonal.

The following uses examples to describe a related example of coding the local model parameter information based on the coding matrix, and uses examples to describe different forms of the coding matrix.

In an example, in the coding scheme corresponding to each second node, the code rate is a code rate 1/2.

Local model parameter information of a second node 1 is $\left[ w_{(1)}^1 \ \ w_{(2)}^1 \right]$. In $w_{(idx)}^{user}$, the superscript indicates an identifier of the second node, and the subscript indicates a sequence number of a model parameter. A coding matrix 1 of the second node 1 is:

$$\begin{bmatrix} h_{11}^1 & 0 & h_{13}^1 & 0 \\ 0 & h_{22}^1 & 0 & h_{24}^1 \end{bmatrix}.$$

In $h_{(idx1 \ idx2)}^{user}$, the superscript indicates the identifier of the second node corresponding to the coding matrix. In this example, the identifier of the second node corresponding to the coding matrix 1 is 1. In this case, in the coding matrix 1, the superscript of each $h_{(idx1 \ idx2)}^{user}$ is 1.

In the two parameters of the subscript of $h_{(idx1 \ idx2)}^{user}$, *idx*1 indicates a sequence number of a corresponding model parameter. In this example, there are two corresponding model parameters, and sequence numbers of the two model parameters are 1 and 2 respectively. In this case, $h_{11}^1$ and $h_{13}^1$ correspond to a same model parameter, and $h_{11}^1$ and $h_{13}^1$ correspond to a same model parameter as $w_{(1)}^1$; and $h_{22}^1$ and $h_{24}^1$ correspond to a same model parameter, and $h_{22}^1$ and $h_{24}^1$ correspond to a same model parameter as $w_{(2)}^1$.

idx2 in the two parameters of the subscript of $h_{(idx1 \ idx2)}^{user}$ indicates a column in which $h_{(idx1 \ idx2)}^{user}$ is located in the corresponding coding matrix. In this example, $h_{11}^1$ is located in a 1st column of the coding matrix 1, and is a non-zero element in the 1st column; and $h_{13}^1$ is located in a 3rd column of the coding matrix 1, and is a non-zero element in the 3rd column. For $h_{22}^1$ and $h_{24}^1$, refer to $h_{11}^1$ and $h_{13}^1$.

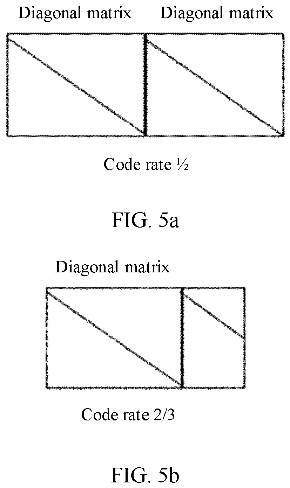

It can be learned that the coding matrix of the second node 1 includes two diagonal matrices. For a diagram of the diagonal matrices in the coding matrix, refer to FIG. 5a.

Local model parameter information of a second node 2 is $\left[w_{(1)}^2 \ w_{(2)}^2\right]$, and a coding matrix 2 of the second node 2 is:

$$\begin{bmatrix} h_{11}^2 & 0 & h_{13}^2 & 0 \\ 0 & h_{22}^2 & 0 & h_{24}^2 \end{bmatrix}.$$

For meanings of the superscript and the subscript of $\mathrm{h}_{(idx1 \ idx2)}^{user}$ in the coding matrix 2, refer to the related explanations in the coding matrix 1. In this example, an identifier of the second node corresponding to the coding matrix 2 is 2. In this case, in the coding matrix 2, the superscript of each $\mathrm{h}_{(idx1 \ idx2)}^{user}$ is 2. $h_{11}^2$ and $h_{13}^2$ correspond to a same model parameter, and $h_{11}^2$ and $h_{13}^2$ correspond to a same model parameter as $w_{(1)}^2$; and $h_{22}^2$ and $h_{24}^2$ correspond to a same model parameter, and $h_{22}^2$ and $h_{24}^2$ correspond to a same model parameter as $w_{(2)}^2$. $h_{11}^2$ is located in a 1st column of the coding matrix 2, and is a non-zero element in the 1st column; and $h_{13}^2$ is located in a 3rd column of the coding matrix 2, and is a non-zero element in the 3rd column. For $h_{22}^2$ and $h_{24}^2$, refer to $h_{11}^2$ and $h_{13}^2$.

It can be learned that the coding matrix of the second node 2 also includes two diagonal matrices.

After the local model parameter information of the second node 1 and the local model parameter information of the second node 2 are separately coded, over-the-air superimposition is performed to obtain fused information $[y_{(1)} \ y_{(2)} \ y_{(3)} \ y_{(4)}]$. In this example, because the coding matrix includes four columns and the code rate is a code rate 1/2, the fused information includes four bits, and $y_{(i)}$ may be considered as information of an $i$th bit in the fused information, where i=1, 2, 3, or 4. In this case, all the bits in the fused information $[y_{(1)} \ y_{(2)} \ y_{(3)} \ y_{(4)}]$ may be indicated by using the following formulas:

$$y_{(1)}{=}w_{(1)}^1 * h_{11}^1{+}w_{(1)}^2 * h_{11}^2{+}\mathrm{n};$$

$$y_{(2)}{=}w_{(2)}^1 * h_{22}^1{+}w_{(2)}^2 * h_{22}^2{+}\mathrm{n};$$

$$y_{(3)}{=}w_{(1)}^1 * h_{13}^1{+}w_{(1)}^2 * h_{13}^2{+}\mathrm{n}; \text{ and}$$

$$y_{(4)}{=}w_{(2)}^1 * h_{24}^1{+}w_{(2)}^2 * h_{24}^2{+}\mathrm{n}.$$

n indicates noise of a wireless channel, and the foregoing four formulas are written into the following two sets of equations:

$$\begin{bmatrix} y_{(1)} \\ y_{(3)} \end{bmatrix}{=}\begin{bmatrix} w_{(1)}^1 & w_{(1)}^2 \end{bmatrix}\begin{bmatrix} h_{11}^1 & h_{13}^1 \\ h_{11}^2 & h_{13}^2 \end{bmatrix} + \mathrm{n};$$

and

$$\begin{bmatrix} y_{(2)} \\ y_{(4)} \end{bmatrix}{=}\begin{bmatrix} w_{(2)}^1 & w_{(2)}^2 \end{bmatrix}\begin{bmatrix} h_{22}^1 & h_{24}^1 \\ h_{22}^2 & h_{24}^2 \end{bmatrix} + \mathrm{n}.$$

Based on the foregoing two sets of equations, after receiving the fused information of first parameter information of the second node 1 and first parameter information of the second node 2, the first node may perform parameter estimation based on an AMP algorithm, an LMMSE algorithm, or the like, to obtain an average value $[(w_{(1)}^1{+}w_{(1)}^2)/2, \ (w_{(2)}^1{+}w_{(2)}^2)/2]$. The average value may be used as updated model parameter information, and is separately sent by the first node to the second node 1 and the second node 2.

In addition, in the foregoing example, the coding matrix of the second node 1 may alternatively be in another form.

For example, in some examples, the coding matrix 1 of the second node 1 is:

$$\begin{bmatrix} 0 & h_{22}^1 & 0 & h_{24}^1 \\ h_{11}^1 & 0 & h_{13}^1 & 0 \end{bmatrix}.$$

Meanings of $h_{11}^1$, $h_{13}^1$, $h_{22}^1$, and $h_{24}^1$ in the coding matrix 1 in this example are the same as meanings of $h_{11}^1$, $h_{13}^1$, $h_{22}^1$, and $h_{24}^1$ in the previous example, but in this example, positions of $h_{11}^1$, $h_{13}^1$, $h_{22}^1$, and $h_{24}^1$ in corresponding columns are different from positions of $h_{11}^1$, $h_{13}^1$, $h_{22}^1$, and $h_{24}^1$ in corresponding columns in the previous example. For example, in this example, $h_{11}^1$ is used as a non-zero element in a 1st column of the coding matrix 1, and is located at a last bit of the 1st column instead of a 1st bit of

the 1st column.

The coding matrix 2 of the second node 2 is:

$$\begin{bmatrix} 0 & h_{22}^2 & 0 & h_{24}^2 \\ h_{11}^2 & 0 & h_{13}^2 & 0 \end{bmatrix}.$$

Meanings of $h_{11}^2$, $h_{13}^2$, $h_{22}^2$, and $h_{24}^2$ in the coding matrix 2 in this example are the same as meanings of $h_{11}^2$, $h_{13}^2$, $h_{22}^2$, and $h_{24}^2$ in the previous example, but in this example, positions of $h_{11}^2$, $h_{13}^2$, $h_{22}^2$, and $h_{24}^2$ in corresponding columns are different from positions of $h_{11}^2$, $h_{13}^2$, $h_{22}^2$, and $h_{24}^2$ in corresponding columns in the previous example.

It can be learned that in this example, each column in the coding matrix 1 and the coding matrix 2 includes at most one non-zero element, but no diagonal matrix is formed at positions of non-zero elements. A manner of performing coding based on the coding matrix in this form is similar to that in the related example of the coding matrix in the diagonal matrix form, and details are not described herein again.

In another example, in the coding scheme corresponding to each second node, the code rate is a code rate 2/3.

Local model parameter information of a second node 1 is $\begin{bmatrix} w_{(1)}^1 & w_{(2)}^1 \end{bmatrix}$. In $w_{(idx)}^{user}$, the superscript indicates an identifier of the second node, and the subscript indicates a sequence number of a model parameter. A coding matrix 3 of the second node 1 is:

$$\begin{bmatrix} h_{11}^1 & 0 & h_{13}^1 \\ 0 & h_{22}^1 & 0 \end{bmatrix}.$$

In $h_{(idx1\ idx2)}^{user}$, the superscript indicates the identifier of the second node corresponding to the coding matrix. In this example, the identifier of the second node corresponding to the coding matrix 3 is 1. In this case, in the coding matrix 3, the superscript of each $h_{(idx1\ idx2)}^{user}$ is 1.

In the two parameters of the subscript of $h_{(idx1\ idx2)}^{user}$, idx1 indicates a sequence number of a corresponding model parameter. In this example, there are two corresponding model parameters, and sequence numbers of the two model parameters are 1 and 2 respectively. In this case, $h_{11}^1$ and $h_{13}^1$ correspond to a same model parameter, and $h_{11}^1$ and $h_{13}^1$ correspond to a same model parameter as $w_{(1)}^1$; and $h_{22}^1$

corresponds to a different model parameter from $h_{11}^1$ and $h_{13}^1$, and $h_{22}^1$ corresponds to a same model parameter as $w_{(2)}^1$.

idx2 in the two parameters of the subscript of $h_{(idx1\ idx2)}^{user}$ indicates a column in which $h_{(idx1\ idx2)}^{user}$ is located in the corresponding coding matrix. In this example, $h_{11}^1$ is located in a 1st column of the coding matrix 3, and is a non-zero element in the 1st column; $h_{22}^1$ is located in a 2nd column of the coding matrix 3, and is a non-zero element in the 2nd column; and $h_{13}^1$ is located in a 3rd column of the coding matrix 3, and is a non-zero element in the 3rd column.

For a diagram of a diagonal matrix in the coding matrix 3, refer to FIG. 5b.

Local model parameter information of a second node 2 is $\begin{bmatrix} w_{(1)}^2 & w_{(2)}^2 \end{bmatrix}$, and a coding matrix 4 of the second node 2 is:

$$\begin{bmatrix} h_{11}^2 & 0 & h_{13}^2 \\ 0 & h_{22}^2 & 0 \end{bmatrix}.$$

For meanings of the superscript and the subscript of $h_{(idx1\ idx2)}^{user}$, refer to the related explanations in the coding matrix 3. In this example, an identifier of the second node corresponding to the coding matrix 4 is 2. In this case, in the coding matrix 4, the superscript of each $h_{(idx1\ idx2)}^{user}$ is 2. $h_{11}^2$ and $h_{13}^2$ correspond to a same model parameter, and $h_{11}^2$ and $h_{13}^2$ correspond to a same model parameter as $w_{(1)}^2$; and $h_{22}^2$ corresponds to a different model parameter from $h_{11}^2$ and $h_{13}^2$, and $h_{22}^2$ corresponds to a same model parameter as $w_{(2)}^2$. $h_{11}^2$ is located in a 1st column of the coding matrix 4, and is a non-zero element in the 1st column; $h_{22}^2$ is located in a 2nd column of the coding matrix 4, and is a non-zero element in the 2nd column; and $h_{13}^2$ is located in a 3rd column of the coding matrix 4, and is a non-zero element in the 3rd column.

After the local model parameter information of the second node 1 and the local model parameter information of the second node 2 are separately coded, over-the-air superimposition is performed to obtain fused information $[y_{(1)}\ y_{(2)}\ y_{(3)}]$. In this example, because the coding matrix includes three columns and the code rate is a code rate 2/3, the fused information includes three bits, and $y_{(i)}$ may be considered as information of an $i^{th}$ bit in the fused information, where i=1, 2, or 3. The fused information $[y_{(1)}\ y_{(2)}\ y_{(3)}]$ may be indicated by using the following formulas:

$$y_{(1)}=w_{(1)}^1 * h_{11}^1+w_{(1)}^2 * h_{11}^2+\text{n};$$

$$y_{(2)}=w_{(2)}^1 * h_{22}^1+w_{(2)}^2 * h_{22}^2+\text{n};$$

and

$$y_{(3)}=w_{(1)}^1 * h_{13}^1+w_{(1)}^2 * h_{13}^2+\text{n}.$$

n indicates noise of a wireless channel, and the foregoing three formulas are written into the following two sets of equations:

$$\begin{bmatrix} y_{(1)} \\ y_{(3)} \end{bmatrix}=\begin{bmatrix} w_{(1)}^1 & w_{(1)}^2 \end{bmatrix}\begin{bmatrix} h_{11}^1 & h_{13}^1 \\ h_{11}^2 & h_{13}^2 \end{bmatrix} + \text{n};$$

and

$$y_{(2)}=\begin{bmatrix} w_{(2)}^1 & w_{(2)}^2 \end{bmatrix}\begin{bmatrix} h_{22}^1 \\ h_{22}^2 \end{bmatrix} + \text{n}.$$

Based on the foregoing two sets of equations, after receiving the fused information of first parameter information of the second node 1 and first parameter information of the second node 2, the first node may perform parameter estimation based on an AMP algorithm, an LMMSE algorithm, or the like, to obtain an average value $[(w_{(1)}^1+w_{(1)}^2)/2,\ (w_{(2)}^1+w_{(2)}^2)/2]$ . The average value may be used as updated model parameter information, and is separately sent by the first node to the second node 1 and the second node 2.

In the foregoing example, the coding matrix 3 and the coding matrix 4 may have different specific content, and the second node 2 does not learn of the coding matrix 4 of the second node 1. Therefore, even if the second node 2 obtains the first parameter information $w_{(1)}^1$ and $w_{(2)}^1$ of the second node 1, the second node 2 cannot decode the local model parameter information $\begin{bmatrix} w_{(1)}^1 & w_{(2)}^1 \end{bmatrix}$ of the first node 1, thereby ensuring information security of the local model parameter information of the second node.

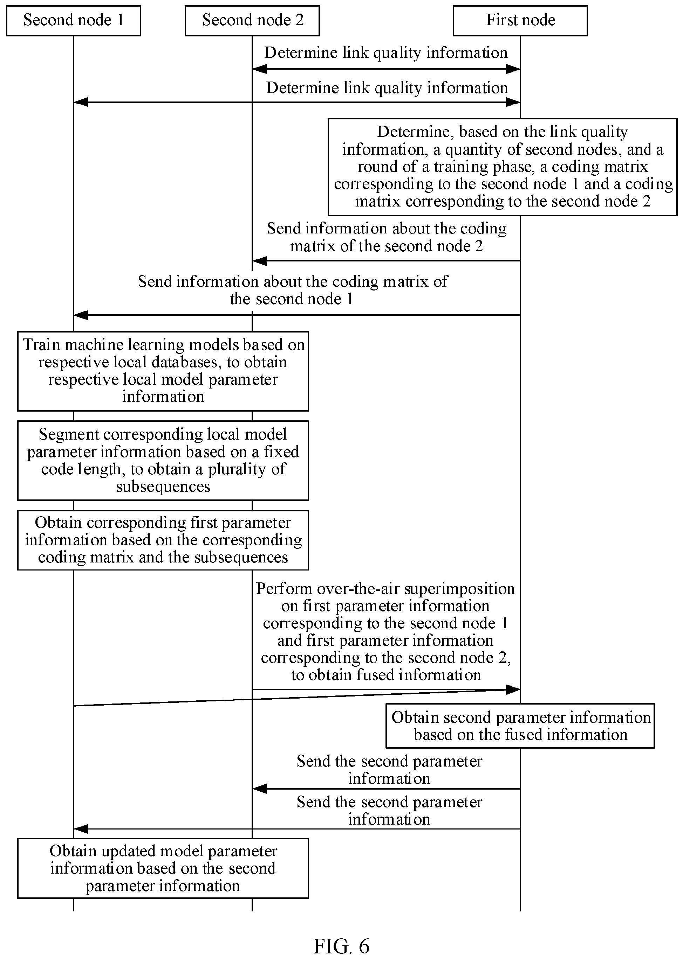

FIG. 6 is an example diagram of information exchange between a plurality of second nodes and a first node.

A second node 1 and a second node 2 are used as an example to describe operations of the plurality of second nodes.

In the example shown in FIG. 6, the second node 1 and the second node 2 separately communicate with the first node, so that the first node determines link quality information between the first node and the second node 1 and link quality information between the first node and the second node 2.

Then, the first node determines, based on the link quality information, a quantity of second nodes, and a round of a training phase, a coding matrix corresponding to the second node 1 and a coding matrix corresponding to the second node 2.

The first node respectively sends information about the respective corresponding coding matrices to the second node 1 and the second node 2.

Then, the second node 1 and the second node 2 respectively train machine learning models based on respective local databases, to obtain respective local model parameter information.

Then, the second node 1 segments corresponding local model parameter information based on a fixed code length to obtain a plurality of subsequences, codes all the subsequences based on the coding matrix corresponding to the second node 1, and combines all coded subsequences to obtain first parameter information corresponding to the second node 1. Similarly, the second node 2 may obtain first parameter information corresponding to the second node 2.

Over-the-air superimposition is performed on the first parameter information corresponding to the second node 1 and the first parameter information corresponding to the second node 2, to obtain fused information.

After receiving the fused information, the first node may obtain the second parameter information based on the fused information, and separately send the second parameter information to the second node 1 and the second node 2, so that the second node 1 and the second node 2 obtain updated model parameter information based on the second parameter information.

Based on the foregoing embodiments, the inventor performs emulation and verification on different examples. Specifically, emulation and verification are performed on a convolutional neural network. In an emulation and verification process, a total quantity of rounds of a training phase of the convolutional neural network is 50.

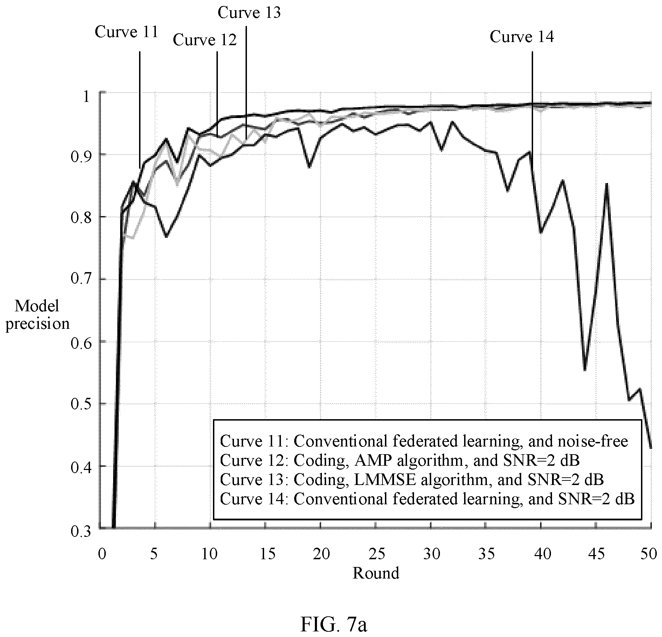

FIG. 7a shows an emulation and verification result.

A curve 11 is a curve of a change of model precision with a round of a training stage, and an emulation condition corresponding to the curve 11 is as follows: In a noise-free case, in a federated learning process, over-the-air superimposition is directly performed on respective local model parameters of all second nodes to obtain updated model parameter information. The curve 11 is a curve of a change in a conventional federated learning manner in a noise-free case. Because of a noise-free state, the updated model parameter information is accurate, and the curve 11 may be considered as an idealized curve.

An emulation condition corresponding to a curve 12 is as follows: In a federated learning process, after all second nodes encode corresponding local model parameters by using corresponding coding matrices, over-the-air superimposition is performed to obtain fused information, and parameter estimation is performed on the fused information by using an AMP algorithm, to obtain updated model parameter information. In addition, a wireless channel has noise, and a signal-to-noise ratio is 2 dB. It can be learned that the curve 12 is relatively close to the curve 11. Therefore, it may be considered that a training process indicated by the curve 12 is close to an idealized training process, and the curve 12 has a relatively good training effect and a relatively high convergence speed.

An emulation condition corresponding to a curve 13 is as follows: In a federated learning process, after all second nodes encode corresponding local model parameters by using corresponding coding matrices, over-the-air superimposition is performed to obtain fused information, and parameter estimation is performed on the fused information by using an LMMSE algorithm, to obtain updated model parameter information. In addition, a wireless channel has noise, and a signal-to-noise ratio is 2 dB. It can be learned that the curve 13 is also relatively close to the curve 11. Therefore, it may be considered that a training process indicated by the curve 13 is close to an idealized training process, and the curve 13 has a relatively good training effect and a relatively high convergence speed.

An emulation condition corresponding to a curve 14 is as follows: In a federated learning process, over-the-air superimposition is directly performed on local model parameter information of all second nodes to obtain updated model parameter information. In addition, a wireless channel has noise, and a signal-to-noise ratio is 2 dB. In other words, the curve 14 is a curve of a change in a conventional federated learning manner in a noise case. It can be learned that, due to impact of the noise of the wireless channel, the updated model parameter information obtained in the federated learning process is inaccurate, and a weight in an updated convolutional neural network deviates from a correct gradient direction. As a result, the convolutional neural network cannot converge in a training process, and a training effect is difficult to meet a requirement.

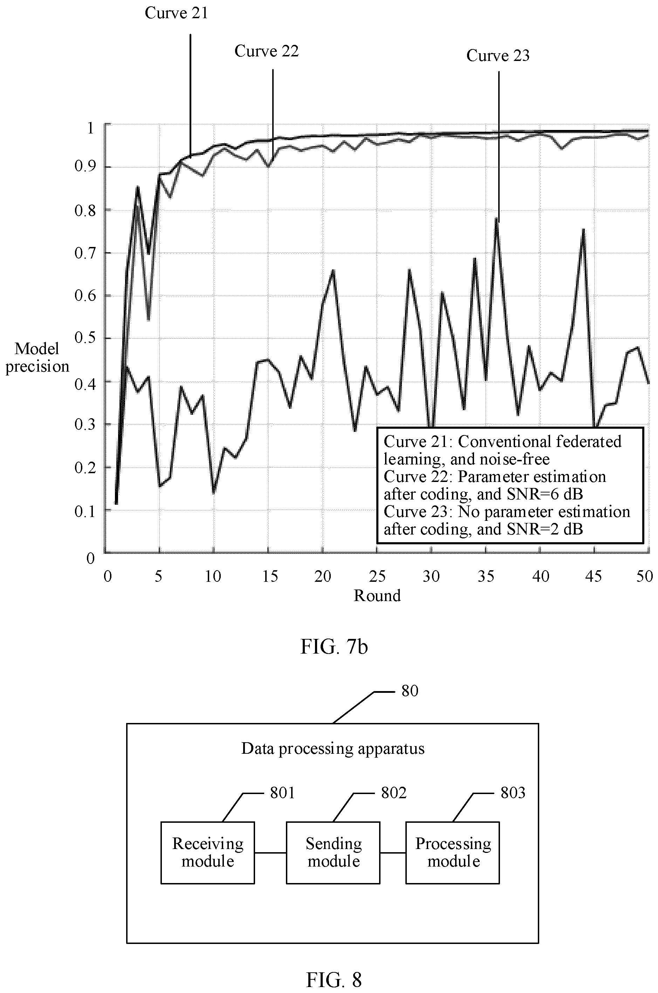

FIG. 7b shows another emulation and verification result.

An emulation condition corresponding to a curve 21 is as follows: In a noise-free case, in a federated learning process, over-the-air superimposition is directly performed on respective local model parameters of all second nodes to obtain updated model parameter information. The curve 21 is a curve of a change in a conventional federated learning manner in a noise-free case. The curve 21 may be considered as an idealized curve.

An emulation condition corresponding to a curve 22 is as follows: In a federated learning process, after all second nodes encode corresponding local model parameters by using corresponding coding matrices, over-the-air superimposition is performed to obtain fused information, and parameter estimation is performed on the fused information to obtain updated model parameter information. In addition, a wireless channel has noise, and a signal-to-noise ratio is 6 dB. It can be learned that the curve 22 is relatively close to the curve 21. Therefore, it may be considered that the curve 22 has a relatively good training effect and a relatively high convergence speed.

An emulation condition corresponding to a curve 23 is as follows: In a federated learning process, after all second nodes encode corresponding local model parameters by using corresponding coding matrices, over-the-air superimposition is performed to obtain fused information, and the fused information is directly used as updated model parameter information without performing parameter estimation. In addition, a wireless channel has noise, and a signal-to-noise ratio is 6 dB. It can be learned that, because parameter estimation is not performed, the updated model parameter information is inaccurate, and consequently a convolutional neural network cannot converge.

Based on the foregoing emulation results, it can be learned that, noise in a wireless transmission process has relatively small impact on updated model parameter information obtained by encoding and then fusing the respective local model parameter information of all the second nodes and then performing parameter estimation based on the fused information, and processing precision is relatively high, thereby improving a training speed in the second node, and reducing impact of an error caused by channel noise between the second node and the first node on a training process in the second node.

The foregoing describes the data processing method from a plurality of aspects in embodiments of this application. The following describes a data processing apparatus in this application with reference to the accompanying drawings.

As shown in FIG. 8, an embodiment of this application provides a data processing apparatus 80. The apparatus 80 may be used in the first node in the foregoing embodiments.

An embodiment of the apparatus 80 includes:

a receiving module 801, configured to receive fused information, where the fused information is obtained by performing over-the-air superimposition on first parameter information from all second nodes, and first parameter information sent by each second node is obtained by the corresponding second node by encoding corresponding local model parameter information in a corresponding coding scheme; and
a sending module 802, configured to send second parameter information obtained based on the fused information to each second node, where the second parameter information is used by each second node to obtain updated model parameter information.

Optionally, the apparatus 80 further includes a processing module 803.

The processing module 803 is configured to: determine, based on connection status information between the first node and the plurality of second nodes and/or a training phase corresponding to the local model parameter information of each second node, the coding scheme corresponding to each second node.

The sending module 802 is further configured to:

send, to each second node, information about the coding scheme corresponding to the second node.

Optionally, the connection status information between the first node and the plurality of second nodes includes one or more of the following information: link quality information between the first node and each second node, and a quantity of second nodes.

Optionally, the coding scheme corresponding to each second node includes a code rate, and all the second nodes correspond to a same code rate;

link quality indicated by the link quality information is in a positive correlation with the code rate; and the quantity of second nodes is in a positive correlation with the code rate.

Optionally, the coding scheme corresponding to each second node includes a code rate, and all the second nodes correspond to a same code rate; and a round corresponding to the training phase is in a negative correlation with the code rate.

Optionally, the coding scheme corresponding to each second node is described by using a coding matrix of a real number field corresponding to the second node, and coding matrices corresponding to different second nodes have a same size.

Optionally, coding matrices corresponding to different second nodes have different content.

Optionally, each column in the coding matrix includes at most one non-zero element.

Optionally, the second parameter information includes updated model parameter information obtained by the first node based on the fused information and coding schemes corresponding to the second nodes.

Optionally, all the second nodes correspond to a same coding scheme, and the second parameter information includes the fused information, so that each second node obtains the updated model parameter information based on the fused information and the coding scheme.

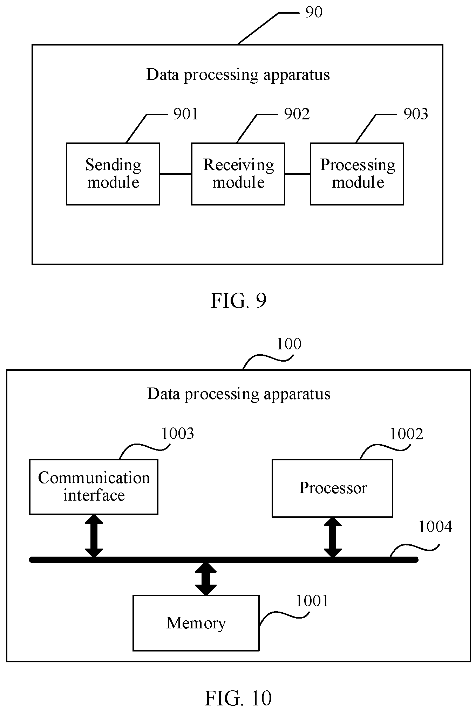

As shown in FIG. 9, an embodiment of this application provides a data processing apparatus 90. The apparatus 90 may be used in any second node in the foregoing embodiments.

An embodiment of the apparatus 90 includes:

a sending module 901, configured to send first parameter information of the second node to a first node, so that over-the-air superimposition is performed on the first parameter information of the second node and first parameter information sent by all other second nodes, to obtain fused information, where the first parameter information sent by the second node is obtained by the second node by encoding corresponding local model parameter information in a corresponding coding scheme;
a receiving module 902, configured to receive second parameter information from the first node, where the second parameter information is obtained by the first node based on the fused information; and
a processing module 903, configured to obtain updated model parameter information based on the second parameter information.

Optionally, the receiving module is further configured to receive information about the coding scheme corresponding to the second node from the first node.

Optionally, the coding scheme corresponding to the second node is described by using a coding matrix of a real number field corresponding to the second node, and a size of the coding matrix corresponding to the second node is the same as a size of a coding matrix corresponding to each of the other second nodes.

Optionally, content of the coding matrix corresponding to the second node is different from content of a coding matrix corresponding to any one of the other second nodes.

Optionally, each column in the coding matrix of the second node includes at most one non-zero element.

Optionally, the second parameter information includes the updated model parameter information.

Optionally, the coding scheme corresponding to the second node is the same as a coding scheme corresponding to each of the other second nodes, and the second parameter information includes the fused information.

The processing module is configured to: obtain the updated model parameter information based on the fused information and the coding scheme.

FIG. 10 is a diagram of a possible logical structure of a data processing apparatus 100 according to an embodiment of this application. The data processing apparatus 100 is configured to implement the function of the first node in any one of the foregoing embodiments. The data processing apparatus 100 includes a memory 1001, a processor 1002, a communication interface 1003, and a bus 1004. The memory 1001, the processor 1002, and the communication interface 1003 are communicatively connected to each other through the bus 1004.

The memory 1001 may be a read-only memory (read-only memory, ROM), a static storage device, a dynamic storage device, or a random access memory (random access memory, RAM). The memory 1001 may store a program. When the program stored in the memory 1001 is executed by the processor 1002, the processor 1002 and the communication interface 1003 are configured to perform the steps performed by the first node in the foregoing data processing method embodiments, and the like.

The processor 1002 may be a central processing unit (central processing unit, CPU), a microprocessor, an application-specific integrated circuit (application-specific integrated circuit, ASIC), a graphics processing unit (graphics processing unit, GPU), a digital signal processor (digital signal processor, DSP), a field programmable gate array (field programmable gate array, FPGA) or another programmable logic device, a discrete gate or transistor logic device, a discrete hardware component, or any combination thereof, and is configured to execute a related program, to implement functions that need to be executed by the sending module, the receiving module, the processing module, and the like in the data processing apparatus used in the first node in the foregoing embodiments, or perform the steps performed by the first node in the data processing method embodiments in the method embodiments of this application, and the like. The steps in the methods disclosed with reference to embodiments of this application may be directly performed by a hardware decoding processor, or may be performed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory 1001. The processor 1002 reads information in the memory 1001, and performs, in combination with hardware of the processor 1002, the steps performed by the first node in the foregoing data processing method embodiments, and the like.

The communication interface 1003 uses a transceiver apparatus, for example, but not limited to, a transceiver, to implement communication between the data processing apparatus 100 and another device or a communication network. For example, information may be exchanged with a second node through the communication interface 1003.

The bus 1004 may implement a path for transmitting information between components (for example, the memory 1001, the processor 1002, and the communication interface 1003) of the data processing apparatus 100. The bus 1004 may be a peripheral component interconnect (Peripheral Component Interconnect, PCI) bus, an extended industry standard architecture (Extended Industry Standard Architecture, EISA) bus, or the like. Buses may be classified into an address bus, a data bus, a control bus, and the like. For ease of representation, only one bold line is used for representation in FIG. 10, but it does not indicate that there is only one bus or only one type of bus.

In some embodiments, the data processing apparatus 100 includes a chip, the chip may include the processor 1002, and the chip is configured to implement the function of the first node in the foregoing data processing method embodiments.

In another embodiment of this application, a computer-readable storage medium is further provided. The computer-readable storage medium stores computer-executable instructions. When a processor of a device executes the computer-executable instructions, the device performs the steps performed by the processor in FIG. 10.

In another embodiment of this application, a computer program product is further provided. The computer program product includes computer-executable instructions, and the computer-executable instructions are stored in a computer-readable storage medium. When a processor of a device executes the computer-executable instructions, the device performs the steps performed by the processor in FIG. 10.

In another embodiment of this application, a chip system is further provided. The chip system includes a processor, and the processor is configured to implement the steps performed by the processor in FIG. 10. In a possible design, the chip system may further include a memory. The memory is configured to store program instructions and data that are necessary for the data writing apparatus. The chip system may include a chip, or may include a chip and another discrete component.

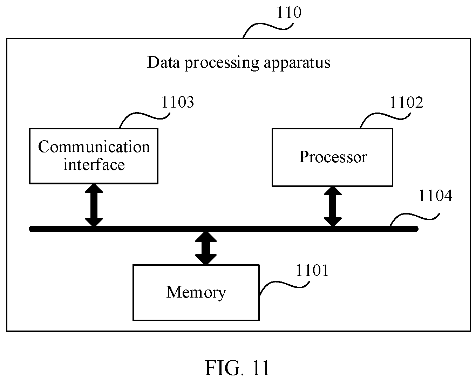

FIG. 11 is a diagram of a possible logical structure of a data processing apparatus 110 according to an embodiment of this application. The data processing apparatus 110 is configured to implement the function of any second node in any one of the foregoing embodiments. The data processing apparatus 110 includes a memory 1101, a processor 1102, a communication interface 1103, and a bus 1104. The memory 1101, the processor 1102, and the communication interface 1103 are communicatively connected to each other through the bus 1104.

The memory 1101 may be a read-only memory (read-only memory, ROM), a static storage device, a dynamic storage device, or a random access memory (random access memory, RAM). The memory 1101 may store a program. When the program stored in the memory 1101 is executed by the processor 1102, the processor 1102 and the communication interface 1103 are configured to perform the steps performed by the second node in the foregoing data processing method embodiments, and the like.

The processor 1102 may be a central processing unit (central processing unit, CPU), a microprocessor, an application-specific integrated circuit (application-specific integrated circuit, ASIC), a graphics processing unit (graphics processing unit, GPU), a digital signal processor (digital signal processor, DSP), a field programmable gate array (field programmable gate array, FPGA) or another programmable logic device, a discrete gate or transistor logic device, a discrete hardware component, or any combination thereof, and is configured to execute a related program, to implement functions that need to be executed by the sending module, the receiving module, the processing module, and the like in the data processing apparatus used in the second node in the foregoing embodiments, or perform the steps performed by the second node in the data processing method embodiments in the method embodiments of this application, and the like. The steps in the methods disclosed with reference to embodiments of this application may be directly performed by a hardware decoding processor, or may be performed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory 1101. The processor 1102 reads information in the memory 1101, and performs, in combination with hardware of the processor 1102, the steps performed by the second node in the foregoing data processing method embodiments, and the like.

The communication interface 1103 uses a transceiver apparatus, for example, but not limited to, a transceiver, to implement communication between the data processing apparatus 110 and another device or a communication network. For example, information may be exchanged with a first node through the communication interface 1103.

The bus 1104 may implement a path for transmitting information between components (for example, the memory 1101, the processor 1102, and the communication interface 1103) of the data processing apparatus 110. The bus 1104 may be a peripheral component interconnect (Peripheral Component Interconnect, PCI) bus, an extended industry standard architecture (Extended Industry Standard Architecture, EISA) bus, or the like. Buses may be classified into an address bus, a data bus, a control bus, and the like. For ease of representation, only one bold line is used for representation in FIG. 11, but it does not indicate that there is only one bus or only one type of bus.

In some embodiments, the data processing apparatus 110 includes a chip, the chip may include the processor 1102, and the chip is configured to implement the function of the second node in the foregoing data processing method embodiments.

In another embodiment of this application, a computer-readable storage medium is further provided. The computer-readable storage medium stores computer-executable instructions. When a processor of a device executes the computer-executable instructions, the device performs the steps performed by the processor in FIG. 11.

In another embodiment of this application, a computer program product is further provided. The computer program product includes computer-executable instructions, and the computer-executable instructions are stored in a computer-readable storage medium. When a processor of a device executes the computer-executable instructions, the device performs the steps performed by the processor in FIG. 11.

In another embodiment of this application, a chip system is further provided. The chip system includes a processor, and the processor is configured to implement the steps performed by the processor in FIG. 11. In a possible design, the chip system may further include a memory. The memory is configured to store program instructions and data that are necessary for the data writing apparatus. The chip system may include a chip, or may include a chip and another discrete component.

In another embodiment of this application, a communication system is further provided. The communication system includes a data processing apparatus 100 and a plurality of data processing apparatuses 110. The data processing apparatus 100 is configured to implement the function of the first node in any one of the foregoing embodiments, and any data processing apparatus 110 is configured to implement the function of any second node in any one of the foregoing embodiments.

A person of ordinary skill in the art may be aware that, in combination with the examples described in embodiments disclosed in this specification, units and algorithm steps can be implemented by using electronic hardware or a combination of computer software and electronic hardware. Whether the functions are performed by using hardware or software depends on particular applications and design constraint conditions of the technical solutions. A person skilled in the art may use different methods to implement the described functions for each particular application, but it should not be considered that the implementation goes beyond the scope of embodiments of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in embodiments of this application, it should be understood that the disclosed system, apparatus, and method may be implemented in other manners. For example, the apparatus embodiments described above are merely examples. For example, division into the units is merely logical function division and there may be other division during actual implementation. For example, a plurality of units or components may be combined or may be integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electronic, mechanical, or other forms.

The units described as separate parts may or may not be physically separate, and the parts displayed as units may or may not be physical units, to be specific, may be located in one place, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions in embodiments of this application essentially, the part contributing to the conventional technology, or a part of the technical solutions may be implemented in a form of a software product. The computer software product is stored in a storage medium, and includes several instructions for enabling a computer device (which may be a personal computer, a server, a network device, or the like) to perform all or some of the steps of the methods in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of embodiments of this application, but the protection scope of embodiments of this application is not limited thereto.

**Claims**

1. A data processing method, wherein the method is applied to a first node, and the first node is connected to each of a plurality of second nodes through a wireless channel; and
the method comprises:

   receiving fused information, wherein the fused information is obtained by performing over-the-air superimposition on first parameter information from all the second nodes, and first parameter information sent by each second node is obtained by the corresponding second node by encoding corresponding local model parameter information in a corresponding coding scheme; and
   sending second parameter information obtained based on the fused information to each second node, wherein the second parameter information is used by each second node to obtain updated model parameter information.

2. The method according to claim 1, wherein the method further comprises:

   determining, based on connection status information between the first node and the plurality of second nodes and/or a training phase corresponding to the local model parameter information of each second node, the coding scheme corresponding to each second node; and
   sending, to each second node, information about the coding scheme corresponding to the second node.

3. The method according to claim 2, wherein the connection status information between the first node and the plurality of second nodes comprises one or more of the following information:
link quality information between the first node and each second node, and a quantity of second nodes.

4. The method according to claim 3, wherein the coding scheme corresponding to each second node comprises a code rate, and all the second nodes correspond to a same code rate;

   link quality indicated by the link quality information is in a positive correlation with the code rate; and
   the quantity of second nodes is in a positive correlation with the code rate.

5. The method according to any one of claims 2 to 4, wherein the coding scheme corresponding to each second node comprises a code rate, and all the second nodes correspond to a same code rate; and a round corresponding to the training phase is in a negative correlation with the code rate.

6. The method according to any one of claims 1 to 5, wherein the coding scheme corresponding to each second node is described by using a coding matrix of a real number field corresponding to the second node, and coding matrices corresponding to different second nodes have a same size.

7. The method according to claim 6, wherein coding matrices corresponding to different second nodes have different content.

8. The method according to claim 6 or 7, wherein each column in the coding matrix comprises at most one non-zero element.

9. The method according to any one of claims 1 to 8, wherein the second parameter information comprises updated model parameter information obtained by the first node based on the fused information and coding schemes corresponding to the second nodes.

10. The method according to any one of claims 1 to 6, wherein all the second nodes correspond to a same coding scheme, and the second parameter information comprises the fused information, so that each second node obtains the updated model parameter information based on the fused information and the coding scheme.

11. A data processing method, wherein the method is applied to a second node, and the second node and at least one other second node are separately connected to a first node through wireless channels; and the method comprises:

sending first parameter information of the second node to the first node, so that over-the-air superimposition is performed on the first parameter information of the second node and first parameter information sent by all other second nodes, to obtain fused information, wherein the first parameter information sent by the second node is obtained by the second node by encoding corresponding local model parameter information in a corresponding coding scheme; receiving second parameter information from the first node, wherein the second parameter information is obtained by the first node based on the fused information; and obtaining updated model parameter information based on the second parameter information.

12. The method according to claim 11, wherein the method further comprises:
receiving information about the coding scheme corresponding to the second node from the first node.

13. The method according to claim 11 or 12, wherein the coding scheme corresponding to the second node is described by using a coding matrix of a real number field corresponding to the second node, and a size of the coding matrix corresponding to the second node is the same as a size of a coding matrix corresponding to each of the other second nodes.

14. The method according to claim 13, wherein content of the coding matrix corresponding to the second node is different from content of a coding matrix corresponding to any one of the other second nodes.

15. The method according to claim 13 or 14, wherein each column in the coding matrix of the second node comprises at most one non-zero element.

16. The method according to any one of claims 11 to 15, wherein the second parameter information comprises the updated model parameter information.

17. The method according to any one of claims 11 to 13, wherein the coding scheme corresponding to the second node is the same as a coding scheme corresponding to each of the other second nodes, and the second parameter information comprises the fused information; and
obtaining the updated model parameter information based on the second parameter information comprises:
obtaining the updated model parameter information based on the fused information and the coding scheme.

18. A data processing apparatus, used in a first node, wherein the first node is connected to each of a plurality of second nodes through a wireless channel; and
the apparatus comprises:

a receiving module, configured to receive fused information, wherein the fused information is obtained by performing over-the-air superimposition on first parameter information from all the second nodes, and first parameter information sent by each second node is obtained by the corresponding second node by encoding corresponding local model parameter information in a corresponding coding scheme; and
a sending module, configured to send second parameter information obtained based on the fused information to each second node, wherein the second parameter information is used by each second node to obtain updated model parameter information.

19. The apparatus according to claim 18, wherein the apparatus further comprises a processing module; the processing module is configured to:

determine, based on connection status information between the first node and the plurality of second nodes and/or a training phase corresponding to the local model parameter information of each second node, the coding scheme corresponding to each second node; and
the sending module is further configured to:
send, to each second node, information about the coding scheme corresponding to the second node.

20. The apparatus according to claim 19, wherein the connection status information between the first node and the plurality of second nodes comprises one or more of the following information:
link quality information between the first node and each second node, and a quantity of second nodes.

21. The apparatus according to claim 20, wherein the coding scheme corresponding to each second node comprises a code rate, and all the second nodes correspond to a same code rate;

> link quality indicated by the link quality information is in a positive correlation with the code rate; and
> the quantity of second nodes is in a positive correlation with the code rate.

22. The apparatus according to any one of claims 19 to 21, wherein the coding scheme corresponding to each second node comprises a code rate, and all the second nodes correspond to a same code rate; and
a round corresponding to the training phase is in a negative correlation with the code rate.

23. The apparatus according to any one of claims 18 to 22, wherein the coding scheme corresponding to each second node is described by using a coding matrix of a real number field corresponding to the second node, and coding matrices corresponding to different second nodes have a same size.

24. The apparatus according to claim 23, wherein coding matrices corresponding to different second nodes have different content.

25. The apparatus according to claim 23 or 24, wherein each column in the coding matrix comprises at most one non-zero element.

26. A data processing apparatus, used in a second node, wherein the second node and at least one other second node are separately connected to a first node through wireless channels; and
the apparatus comprises:

> a sending module, configured to send first parameter information of the second node to the first node, so that over-the-air superimposition is performed on the first parameter information of the second node and first parameter information sent by all other second nodes, to obtain fused information, wherein the first parameter information sent by the second node is obtained by the second node by encoding corresponding local model parameter information in a corresponding coding scheme;
> a receiving module, configured to receive second parameter information from the first node, wherein the second parameter information is obtained by the first node based on the fused information; and
a processing module, configured to obtain updated model parameter information based on the second parameter information.

27. The apparatus according to claim 26, wherein the receiving module is further configured to receive information about the coding scheme corresponding to the second node from the first node.

28. The apparatus according to claim 26 or 27, wherein the coding scheme corresponding to the second node is described by using a coding matrix of a real number field corresponding to the second node, and a size of the coding matrix corresponding to the second node is the same as a size of a coding matrix corresponding to each of the other second nodes.

29. The apparatus according to claim 28, wherein content of the coding matrix corresponding to the second node is different from content of a coding matrix corresponding to any one of the other second nodes.

30. The apparatus according to claim 28 or 29, wherein each column in the coding matrix of the second node comprises at most one non-zero element.

31. A data processing apparatus, wherein the data processing apparatus comprises at least one processor, a memory, and instructions that are stored in the memory and that can be executed by the at least one processor, and the at least one processor executes the instructions to implement the steps of the method according to any one of claims 1 to 10.

32. The apparatus according to claim 31, wherein the apparatus comprises a chip.

33. A computer-readable storage medium, storing a computer program, wherein when the computer program is executed by a processor, the method according to any one of claims 1 to 10 is implemented.

34. A computer program product, wherein the computer program product comprises computer-executable instructions, and when the computer-executable instructions are executed by a processor, the method according to any one of claims 1 to 10 is implemented.

35. A data processing apparatus, wherein the data processing apparatus comprises at least one processor, a memory, and instructions that are stored in the memory and that can be executed by the at least one processor, and the at least one processor executes the instructions to implement the steps of the method according to any one of claims 11 to 17.

36. The apparatus according to claim 35, wherein the apparatus comprises a chip.

37. A computer-readable storage medium, storing a computer program, wherein when the computer program is executed by a processor, the method according to any one of claims 11 to 17 is implemented.

38. A computer program product, wherein the computer program product comprises computer-executable instructions, and when the computer-executable instructions are executed by a processor, the method according to any one of claims 11 to 17 is implemented.

A plurality of
second nodes

First node

Corresponding
first parameter
information

Personal
computer

Updated model
parameter information

Corresponding first
parameter information

Mobile
phone

Updated model
parameter information

Server

Corresponding
first parameter
information

Updated model
parameter
information

Notebook computer

FIG. 1

```
┌─────────────────┐                          ┌─────────────────┐
│   Second node   │                          │   First node    │
└─────────────────┘                          └─────────────────┘
         │                                             │
         │   Step 201. Each second node sends first    │
         │   parameter information of each second node  │
         │   to a first node, so that over-the-air      │
         │   superimposition is performed on first      │
         │   parameter information of all second nodes to│
         │   obtain fused information                    │
         │ ──────────────────────────────────────────▶ │
         │                                             │
         │                              ┌──────────────────────────────┐
         │                              │ Step 202. The first node receives │
         │                              │      the fused information        │
         │                              └──────────────────────────────┘
         │   Step 203. The first node sends second      │
         │   parameter information obtained based on the │
         │   fused information to each second node       │
         │ ◀────────────────────────────────────────── │
         │                                             │
┌──────────────────────────────┐                       │
│   Step 204. Each second node   │                      │
│   receives the second parameter │                     │
│ information sent by the first node │                  │
└──────────────────────────────┘                       │
         │                                             │
┌──────────────────────────────┐                       │
│   Step 205. Each second node   │                      │
│ obtains updated model parameter │                     │
│ information based on the second │                     │
│     parameter information       │                     │
└──────────────────────────────┘                       │
         │                                             │
```

FIG. 2

Coding

Wireless channel

Second node 1

w1 ⊗ H1 ⊕ n

Second node 2

w2 ⊗ H2 ⊕ n

...

Second node k

wk ⊗ Hk ⊕ n

Obtain fused information through over-the-air superimposition

First node

FIG. 3

Second node

First node

Step 401. The first node determines, based on connection status information between the first node and a plurality of second nodes and/or a training phase corresponding to local model parameter information of each second node, a coding scheme corresponding to each second node

Step 402. The first node sends, to each second node, information about the coding scheme corresponding to the second node

Step 403. Each second node receives the information about the corresponding coding scheme from the first node

Step 201. Each second node sends first parameter information of each second node to the first node, so that over-the-air superimposition is performed on first parameter information of all the second nodes to obtain fused information

Step 202. The first node receives the fused information

Step 203. The first node sends second parameter information obtained based on the fused information to each second node

Step 204. Each second node receives the second parameter information sent by the first node

Step 205. Each second node obtains updated model parameter information based on the second parameter information

FIG. 4

Diagonal matrix      Diagonal matrix

Code rate ½

FIG. 5a

Diagonal matrix

Code rate 2/3

FIG. 5b

| Second node 1 | Second node 2 | First node |
|---|---|---|

Determine link quality information

Determine link quality information

Determine, based on the link quality information, a quantity of second nodes, and a round of a training phase, a coding matrix corresponding to the second node 1 and a coding matrix corresponding to the second node 2

Send information about the coding matrix of the second node 2

Send information about the coding matrix of the second node 1

Train machine learning models based on respective local databases, to obtain respective local model parameter information

Segment corresponding local model parameter information based on a fixed code length, to obtain a plurality of subsequences

Obtain corresponding first parameter information based on the corresponding coding matrix and the subsequences

Perform over-the-air superimposition on first parameter information corresponding to the second node 1 and first parameter information corresponding to the second node 2, to obtain fused information

Obtain second parameter information based on the fused information

Send the second parameter information

Send the second parameter information

Obtain updated model parameter information based on the second parameter information

FIG. 6

FIG. 7a

Curve 21

Curve 22

Curve 23

Curve 21: Conventional federated learning, and noise-free
Curve 22: Parameter estimation after coding, and SNR=6 dB
Curve 23: No parameter estimation after coding, and SNR=2 dB

Model precision

Round

FIG. 7b

80

Data processing apparatus

801

Receiving module

802

Sending module

803

Processing module

FIG. 8

90

Data processing apparatus

901 902 903

| Sending module | Receiving module | Processing module |

FIG. 9

100

Data processing apparatus

1003 1002

| Communication interface | Processor |

1004

1001

| Memory |

FIG. 10

FIG. 11

**INTERNATIONAL SEARCH REPORT**

| International application No. |
|---|
| **PCT/CN2022/139469** |

**A. CLASSIFICATION OF SUBJECT MATTER**

G06N20/00(2019.01)i; H04L 27/00(2006.01)i

According to International Patent Classification (IPC) or to both national classification and IPC

**B. FIELDS SEARCHED**

Minimum documentation searched (classification system followed by classification symbols)

IPC: G06N, H04L

Documentation searched other than minimum documentation to the extent that such documents are included in the fields searched

Electronic data base consulted during the international search (name of data base and, where practicable, search terms used)

CNKI, CNTXT, ENTXT, ENTXTC, DWPI: 联邦学习, 模型, 参数, 训练, 空中, 空口, 计算, 叠加, 融合, 聚合, 更新, 编码, 码率, 矩阵, Federated Learning, model, parameter, training, Over the Air, Over-the-Air, computation, superposition, aggregation, update, encoding, code, rate, matrix

**C. DOCUMENTS CONSIDERED TO BE RELEVANT**

| Category* | Citation of document, with indication, where appropriate, of the relevant passages | Relevant to claim No. |
|---|---|---|
| X | CN 115099420 A (THE CHINESE UNIVERSITY OF HONG KONG, SHENZHEN) 23 September 2022 (2022-09-23) description, paragraphs 0014-0023 | 1-3, 6-20, 23-38 |
| A | CN 114841370 A (HANGZHOU NUOWEI INFORMATION TECHNOLOGY CO., LTD.) 02 August 2022 (2022-08-02) entire document | 1-38 |
| A | CN 114867059 A (CHONGQING UNIVERSITY OF SCIENCE & TECHNOLOGY) 05 August 2022 (2022-08-05) entire document | 1-38 |
| A | 曹晓雯 等 (CAO, Xiaowen et al.). "面向边缘智能的空中计算 (Over-the-Air Computation for Edge Intelligence)" 中兴通讯技术 (ZTE TECHNOLOGY JOURNAL), Vol. 26, No. 4, 13 July 2020 (2020-07-13), entire document | 1-38 |
| A | WO 2022080534 A1 (LG ELECTRONICS INC.) 21 April 2022 (2022-04-21) entire document | 1-38 |

| ☐ Further documents are listed in the continuation of Box C. | ☑ See patent family annex. |
|---|---|

\* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **05 September 2023** | **08 September 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2022/139469**

| Patent document cited in search report | | | Publication date (day/month/year) | Patent family member(s) | | | Publication date (day/month/year) |
|---|---|---|---|---|---|---|---|
| CN | 115099420 | A | 23 September 2022 | None | | | |
| CN | 114841370 | A | 02 August 2022 | None | | | |
| CN | 114867059 | A | 05 August 2022 | None | | | |
| WO | 2022080534 | A1 | 21 April 2022 | KR | 20230066389 | A | 15 May 2023 |

Form PCT/ISA/210 (patent family annex) (July 2022)